(19) **Europäisches Patentamt / European Patent Office / Office européen des brevets**

(11) **EP 4 734 634 A1**

(12) **EUROPEAN PATENT APPLICATION**
published in accordance with Art. 153(4) EPC

(43) Date of publication:
**29.04.2026 Bulletin 2026/18**

(21) Application number: **24853362.2**

(22) Date of filing: **18.06.2024**

(51) International Patent Classification (IPC):
**H04W 72/044** (2023.01)

(52) Cooperative Patent Classification (CPC):
**H04W 72/044; H04W 72/0446; H04W 72/0453; H04W 72/20; H04W 72/40**

(86) International application number:
**PCT/CN2024/099690**

(87) International publication number:
**WO 2025/035947 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311018199**

(71) Applicant: **CICT Connected and Intelligent Technologies Co., Ltd.**
**Chongqing 400041 (CN)**

(72) Inventors:
- **WANG, Yakun**
  **Chongqing 400041 (CN)**
- **ZHAO, Rui**
  **Chongqing 400041 (CN)**
- **ZHENG, Shilei**
  **Chongqing 400041 (CN)**
- **WEN, Xiaoran**
  **Chongqing 400041 (CN)**

(74) Representative: **Murgitroyd & Company**
**165-169 Scotland Street**
**Glasgow G5 8PL (GB)**

(54) **SIDELINK RESOURCE DETERMINATION METHOD AND APPARATUS, AND USER EQUIPMENT**

(57) The present application relates to the technical field of communications, and discloses a sidelink resource determination method and apparatus, and a user equipment. The method comprises: acquiring physical sidelink feedback channel (PSFCH) resource indication information; and determining target PSFCH resources on the basis of the PSFCH resource indication information, wherein the target PSFCH resources are used for PSFCH transmission, and a single target PSFCH resource comprises any one of the following: a first interlaced resource block (IRB) and a first number of physical resource blocks (PRBs); and a second IRB.

Acquiring physical sidelink feedback channel PSFCH resource indication information — 101

Determining a target PSFCH resource based on the PSFCH resource indication information, where the target PSFCH resource is used for PSFCH transmission, and a single target PSFCH resource includes any one of the following: one first interlaced resource block IRB and a first quantity of physical resource blocks PRBs; or one second IRB — 102

FIG. 1

**Description**

**CROSS-REFERENCE TO RELATED APPLICATIONS**

The present application claims priority to Chinese Patent Application No. 202311018199.6, filed in China on August 11, 2023, which is incorporated herein by reference in its entirety.

**TECHNICAL FIELD**

The present application relates to the field of communications technologies, and in particular, to a sidelink resource determination method and apparatus, and a user equipment.

**BACKGROUND**

In sidelink on unlicensed spectrum (Sidelink on Unlicensed Spectrum, SL-U), a physical sidelink feedback channel (Physical Sidelink Feedback Channel, PSFCH) transmission resource can support a plurality of structures. However, PSFCH resource mapping or determination methods in a related technology are all designed based on that a PSFCH transmission resource occupies one physical resource block (Physical Resource Block, PRB). Therefore, PSFCH resource mapping or determination methods defined in current standards are not applicable to a physical layer structure of a PSFCH in SL-U.

**SUMMARY**

The present application aims to provide a sidelink resource determination method and apparatus, and a user equipment, to resolve a problem that PSFCH resource mapping or determination methods defined in standards of a related technology are not applicable to a physical layer structure of a PSFCH in SL-U.

According to a first aspect, to achieve the foregoing objective, an embodiment of the present application provides a sidelink resource determination method, including:

> acquiring physical sidelink feedback channel PSFCH resource indication information; and
> determining a target PSFCH resource based on the PSFCH resource indication information, where the target PSFCH resource is used for PSFCH transmission, and a single target PSFCH resource includes any one of the following:
> one first interlaced resource block IRB and a first quantity of physical resource blocks PRBs; or
> one second IRB.

According to a second aspect, to achieve the foregoing objective, an embodiment of the present application provides a sidelink resource determination apparatus, including:

> an acquiring module, configured to acquire physical sidelink feedback channel PSFCH resource indication information; and
> a first determining module, configured to determine a target PSFCH resource based on the PSFCH resource indication information, where a single target PSFCH resource is used for PSFCH transmission, and the target PSFCH resource includes any one of the following:

>> one first IRB and a first quantity of PRBs; or
>> one second IRB.

According to a third aspect, to achieve the foregoing objective, an embodiment of the present application provides a user equipment, including a transceiver, a memory, a processor, and a computer program stored in the memory and running on the processor, where when the processor executes the computer program, the sidelink resource determination method according to the first aspect is implemented.

According to a fourth aspect, to achieve the foregoing objective, an embodiment of the present application provides a readable storage medium, where the readable storage medium stores a program or instructions, and when the program or the instructions are executed by a processor, the sidelink resource determination method according to the first aspect is implemented.

The foregoing technical solutions of the present application have at least the following beneficial effects.

In the sidelink resource determination method according to embodiments of the present application, first, physical sidelink feedback channel PSFCH resource indication information is acquired. Then, a target PSFCH resource is determined based on the PSFCH resource indication information, where a single target PSFCH resource is used for PSFCH transmission, and the target PSFCH resource includes any one of the following: one first interlaced resource block IRB and a first quantity of physical resource blocks PRBs; or one second IRB. In this way, the determined target PSFCH resource is applicable to a physical layer structure of a PSFCH in SL-U.

## BRIEF DESCRIPTION OF THE DRAWINGS

FIG. 1 is a schematic flowchart of a sidelink resource determination method according to an embodiment of the present application.

FIG. 2 is a schematic diagram 1 of neighboring PRBs in a same IRB according to an embodiment of the present application.

FIG. 3 is a schematic diagram of neighboring PRBs in a same IRB except a PRB that is not allowed to be used for PSFCH transmission according to an embodiment of the present application.

FIG. 4 is a schematic diagram 2 of neighboring PRBs in a same IRB according to an embodiment of the present application.

FIG. 5 is a schematic diagram 1 of a PSFCH candidate resource being located at one IRB in one RB set according to an embodiment of the present application.

FIG. 6 is a schematic diagram 2 of a PSFCH candidate resource being located at one IRB in one RB set according to an embodiment of the present application.

FIG. 7 is a schematic diagram 1 of a PSFCH candidate resource according to an embodiment of the present application.

FIG. 8 is a schematic diagram 2 of a PSFCH candidate resource according to an embodiment of the present application.

FIG. 9 is a schematic diagram 1 of determining a target PSFCH transmission resource according to an embodiment of the present application.

FIG. 10 is a schematic diagram of determining a PSFCH candidate resource according to an embodiment of the present application.

FIG. 11 is a schematic diagram 2 of determining a target PSFCH transmission resource according to an embodiment of the present application.

FIG. 12 is a schematic structural diagram of a sidelink resource determination apparatus according to an embodiment of the present application.

FIG. 13 is a schematic structural diagram of a user equipment according to an embodiment of the present application.

## DETAILED DESCRIPTION OF THE EMBODIMENTS

To make the technical problems to be solved, technical solutions, and advantages of the present application clearer, the following describes the present application in detail with reference to the accompanying drawings and specific embodiments. In the following description, specific details such as specific configurations and components are provided only to help fully understand embodiments of the present application. Therefore, a person skilled in the art should understand that various changes and modifications may be made to the embodiments described herein without departing from the scope and spirit of the present application. In addition, for clarity and simplicity, descriptions of known functions and constructions are omitted.

It should be understood that, "one embodiment" and "an embodiment" throughout this specification means that specific features, structures or characteristics related to embodiments may be included in at least one embodiment of the present application. Therefore, descriptions of "in one embodiment" or "in an embodiment" in various places throughout this specification are unnecessary to refer to a same embodiment. In addition, the specific features, structures, or characteristics may be combined in one or more embodiments in any appropriate manner.

In embodiments of the present application, it should be understood that, sequence numbers of the foregoing processes do not mean execution sequences. The execution sequences of the processes should be determined based on functions and internal logic of the processes, and should not be construed as any limitation on the implementation processes of embodiments of the present application.

In embodiments of the present application, it should be understood that, "B that corresponds to A" means that B is associated with A, and B can be determined based on A. However, it should be further understood that determining B based on A does not mean that B is determined based on only A. B may alternatively be determined based on A and/or other information.

Before embodiments of the present application are described, some concepts used in the following descriptions are first explained.

1. Structure of an interlaced resource block (Interlaced Resource Block, IRB)

One IRB includes a plurality of PRBs, where two consecutive available PRBs are spaced by M PRBs. PRBs included in an IRB with an index of m are {m, m+M, m+2M, m+3M, ...}, where m $\in$ {0, 1, ..., M-1}, that is, one IRB includes a plurality of PRBs spaced by M PRBs. IRB structures are respectively defined for two subcarrier spacings 15 kHz and 30kHz, as shown in Table 1.

Table 1 IRB structure

| μ | Subcarrier spacing | Value of M |
|---|---|---|
| 0 | 15 kHz | 10 |
| 1 | 30 kHz | 5 |

With reference to the accompanying drawings, the following describes in detail specific implementations of a sidelink resource determination method and apparatus, and a user equipment according to embodiments of the present application.

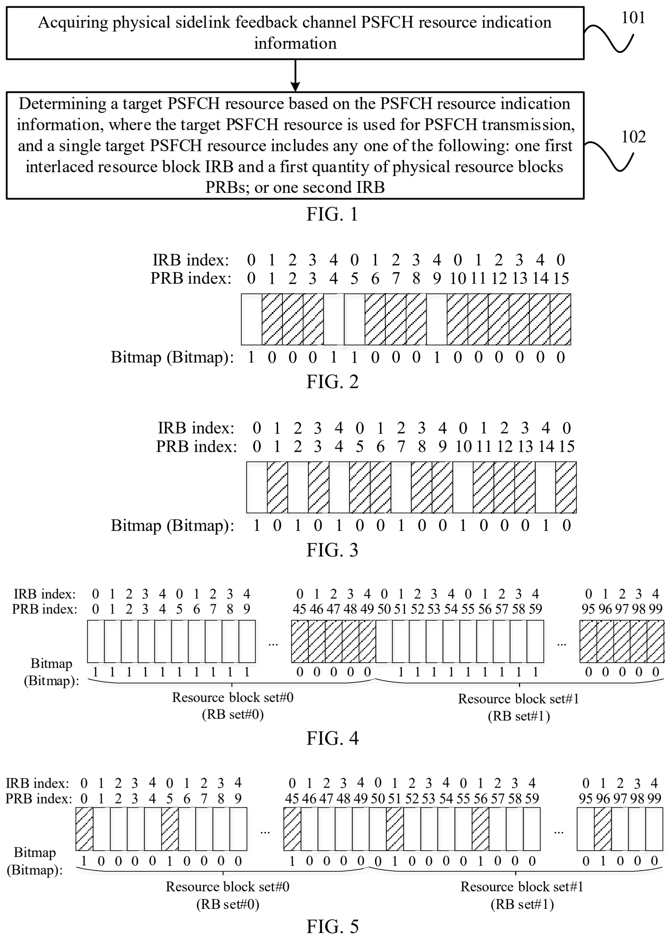

As shown in FIG. 1, the sidelink resource determination method according to embodiments of the present application includes Step 101 and Step 102.

Step 101: Acquiring PSFCH resource indication information. Herein, the PSFCH resource indication information may also be referred to as PSFCH resource configuration information. The PSFCH resource indication information may be configured, pre-configured, or pre-defined information. Specifically, various indication information in the PSFCH resource indication information may be configured, pre-configured, or pre-defined. For example, the various indication information in the PSFCH resource configuration information may be all configured, or may be all pre-configured, or may be all pre-defined. Alternatively, the various indication information in the PSFCH resource configuration information may include configured indication information, pre-configured indication information, and/or pre-defined indication information.

Step 102: Determining a target PSFCH resource based on the PSFCH resource indication information, where the target PSFCH resource is used for PSFCH transmission. The PSFCH transmission is used to carry control information, and the control information includes hybrid automatic repeat request-acknowledgement (Hybrid Automatic Repeat Request-Acknowledgement, HARQ-ACK) information or conflict information (Conflict information). The determining the target PSFCH resource may be: determining one target PSFCH resource or determining a plurality of target PSFCH resources. Specifically, a single target PSFCH resource includes any one of the following:

    one first IRB and a first quantity of PRBs; or
    one second IRB.

It should be noted herein that, a single target PSFCH resource in this step includes one first IRB and a first quantity of PRBs, or includes one second IRB. Specifically, a target PSFCH resource used for a single time of PSFCH transmission includes one first IRB and a first quantity of PRBs, or includes one second IRB. In other words, a structure of a resource used for a single time of PSFCH transmission is one first IRB and a first quantity of PRBs, or one second IRB. In addition, for example, the first IRB is a common (Common) IRB, that is, all PSFCH transmission in one slot occupies a same IRB, or all PSFCH transmission located in a same resource block set (Resource Block Set, RB set) in one slot occupies a same IRB. The first quantity of PRBs is, for example, a first quantity of dedicated PRBs, that is, PSFCH transmission resources mapped to PSSCH transmissions that occupy non-overlapping resources are orthogonal. That the PSFCH transmission resources are orthogonal may be as follows: the PSFCH transmission resources are orthogonal in time domain, and/or, the PSFCH transmission resources are orthogonal in frequency domain, and/or, the PSFCH transmission resources are orthogonal in code domain. The second IRB is, for example, a dedicated (Dedicated) IRB, that is, PSFCH transmission resources mapped to PSSCH transmissions that occupy non-overlapping resources are orthogonal. That the PSFCH transmission resources are orthogonal may be as follows: the PSFCH transmission resources are orthogonal in time domain, and/or, the PSFCH transmission resources are orthogonal in frequency domain, and/or, the PSFCH transmission resources are orthogonal in code domain.

In the sidelink resource determination method according to embodiments of the present application, first, physical sidelink feedback channel PSFCH resource indication information is acquired. Then, a target PSFCH resource is determined based on the PSFCH resource indication information, where the target PSFCH resource is used for PSFCH transmission, and a single target PSFCH resource includes any one of the following: one first IRB and a first quantity of PRBs; or one second IRB. In this way, the target PSFCH resource applicable to a physical layer structure feature of a PSFCH in SL-U may be determined based on the PSFCH resource indication information.

In an optional implementation, the PSFCH resource indication information includes at least one of first indication information, second indication information, third indication information, or fourth indication information.

The first indication information is used to indicate a resource block set (Resource Block set, RB set) (or referred to as a set of RB sets) that includes a PSFCH resource in a resource pool. The first indication information may also be referred to as RB set indication information, and indicates an RB set including a PSFCH resource or a set of RB sets each including a PSFCH resource. The RB set may be a subset of RB sets included in the resource pool or all RB sets included in the resource pool. It should be noted herein that, if the PSFCH indication information does not include the first indication information, when configuring a PSFCH resource, it needs to be ensured that each RB set in the resource pool includes a PSFCH resource. Further, it needs to be ensured that PSFCH resources in the RB sets are the same. Herein, the PSFCH resources being the same refers to: at least one of a quantity of PRBs included in a PSFCH resource, a quantity of IRBs included in a PSFCH resource, or an index of an IRB included in a PSFCH resource is the same among different RB sets.

The second indication information is used to indicate PRBs (or referred to as a PRB set) that are allowed to be used for PSFCH transmission and/or PSFCH reception. In other words, the PRBs indicated by the second indication information can be used for PSFCH transmission and/or PSFCH reception. Herein, a PRB indicated by the second indication information is, for example, a dedicated PRB (or referred to as a dedicated PRB set). A first quantity of PRBs included in a single target PSFCH resource is determined from the PRBs indicated by the second indication information.

The third indication information is used to indicate first IRBs (or referred to as a first IRB set) that are allowed to be used for PSFCH transmission and/or PSFCH reception. For example, the first IRBs are common IRBs (or referred to as a common IRB set), where one common IRB may be one IRB located in a resource pool or one IRB located in an RB set. The third indication information indicates that one IRB in the resource pool is configured, pre-configured, or pre-defined as a common IRB. For example, the first IRB in the resource pool is configured as a common IRB, that is, only one common IRB is configured in the resource pool. Alternatively, the third indication information may indicate that one IRB in each RB set of the resource pool is configured, pre-configured, or pre-defined as a common IRB. For example, the first IRB in each RB set of the resource pool is pre-defined as a common IRB, that is, a quantity of common IRBs configured in the resource pool is equal to a quantity of RB sets included in the resource pool. Alternatively, the third indication information may indicate that one IRB in a target RB set or each RB set of a target set of RB sets in the resource pool is configured, pre-configured, or pre-defined as a common IRB, and the target RB set may be the RB set indicated by the first indication information. For example, the resource pool includes three RB sets, and the first IRB in the first RB set and the first IRB in the second RB set are configured as common IRBs. That is, a quantity of common IRBs configured in the resource pool is equal to a quantity of the RB sets included in the target set of RB sets. A first IRB included in a single target PSFCH resource is determined from the first IRB indicated by the third indication information.

The fourth indication information is used to indicate second IRBs (or referred to as a second IRB set) that are allowed to be used for PSFCH transmission and/or PSFCH reception. For example, the second IRBs are dedicated IRBs. One second IRB may be one IRB located in the resource pool or one IRB located in an RB set. A second IRB included in a single target PSFCH resource is determined from the second IRB indicated by the fourth indication information.

For example, in determining the target PSFCH resource, one or more target PSFCH resources that include one first IRB and a first quantity of PRBs each may be determined based on the second indication information and the third indication information, or based on the first indication information, the second indication information, and the third indication information. Alternatively, one or more target PSFCH resources that include one IRB each may be determined based on the fourth indication information, or based on the first indication information and the fourth indication information.

In an optional implementation, the PRB that is allowed to be used for PSFCH transmission and/or PSFCH reception and that is indicated by the second indication information is any one of the following:

a PRB that is allowed to be used for PSFCH transmission and/or PSFCH reception and that is included in the resource pool; or

a PRB that is allowed to be used for PSFCH transmission and/or PSFCH reception and that is included in a target RB set.

The target RB set may be any one or more RB sets in the resource pool (as a special example, the plurality of RB sets may refer to all the RB sets in the resource pool). Alternatively, the target RB set is the RB set indicated by the first indication information. In other words, the target RB set is one or more RB sets each including a PSFCH resource. For example, if the PSFCH resource indication information includes the first indication information, the target RB set is the RB set indicated by the first indication information. Alternatively, if the PSFCH resource indication information does not include the first indication information, the target RB set may be any one or more RB sets or all the RB sets in the resource pool.

For example, when PSFCH resource configuration and resource mapping are performed with respect to the entire resource pool, the PRB indicated by the second indication information is a PRB allowed to be used for PSFCH transmission and/or PSFCH reception in the resource pool. When PSFCH resource configuration and resource mapping are performed with respect to each RB set (one resource pool includes one or more RB sets), the PRB indicated by the second indication information is a PRB allowed to be used for PSFCH transmission and/or PSFCH reception in a specific RB set (the target RB set).

It should be noted herein that, in a subsequent process of determining the target PSFCH resource in a case that the PRB that is allowed to be used for PSFCH transmission and/or PSFCH reception and that is indicated by the second indication information is a PRB that is allowed to be used for PSFCH transmission and/or PSFCH reception and that is included in the resource pool, the PSFCH resource may be determined at a granularity of an RB set, that is, the PSFCH resource may be determined with respect to each RB set.

In a specific implementation, PRBs that are allowed to be used for PSFCH transmission and/or PSFCH reception and that are configured in the resource pool include a second quantity of first PSFCH candidate frequency domain resources. Herein, the first PSFCH candidate frequency domain resource is, for example, a first quantity of PRBs (which, for example, is specifically a first quantity of dedicated PRBs). For example, the PRB that is allowed to be used for PSFCH transmission and/or PSFCH reception including the second quantity of first PSFCH candidate frequency domain resources may be understood as: the PRB that is allowed to be used for PSFCH transmission and/or PSFCH reception may constitute or form the second quantity of first PSFCH candidate frequency domain resources.

The second quantity of first PSFCH candidate frequency domain resources meet at least one of the following conditions:

the second quantity is an integer multiple of a product of a PSFCH resource period and a quantity of sub-channels in the resource pool (a total quantity of sub-channels included in all the RB sets in the resource pool is a product of a quantity of sub-channels included in a single RB set and a quantity of the RB sets included in the resource pool), where in particular, the integer multiple may be 1, that is, the second quantity is a product of the PSFCH resource period and the quantity of sub-channels in the resource pool;
the second quantity is a positive integer; or
the first PSFCH candidate frequency domain resource includes a first quantity of PRBs, where the first quantity of PRBs meet a first condition, where the first quantity is a quantity of PRBs (dedicated PRBs) that need to be occupied by a single time of PSFCH transmission.

Specifically, the first condition includes at least one of the following three conditions: being located in one RB set, being located in a same IRB, or being located in consecutive PRBs in a same IRB.

More specifically, in this optional implementation, the being located in consecutive PRBs in a same IRB includes any one of the following cases:

Case 1: neighboring PRBs in a same IRB, that is, any two neighboring or consecutive PRBs that are spaced by M PRBs, where M is determined by a subcarrier spacing. For example, if the subcarrier spacing is 15 kHz, M is 10; or if the subcarrier spacing is 30 kHz, M is 5. With reference to FIG. 2, the following describes the case 1 by using an example.

In FIG. 2, PRB#0 and PRB#5 are two neighboring PRBs located in a same IRB#0, and may be referred to as two consecutive PRBs located in the same IRB#0. Although PRB#0 and PRB#10 in FIG. 2 are located in the same IRB#0, PRB#0 and PRB#10 are separated by PRB#5 (which is also located in IRB#0). Therefore, PRB#0 and PRB#10 are PRBs located in a same IRB, but are not consecutive PRBs located in a same IRB.

It is assumed that the total quantity of sub-channels in the resource pool (that is, a sum of quantities of sub-channels included in all RB sets in the resource pool) is 2, and the PSFCH resource period is one slot (that is, a PSFCH resource needs to be configured for each slot). Therefore, a quantity of first PSFCH candidate frequency domain resources (each first PSFCH candidate frequency domain resource includes a first quantity of dedicated PRBs, and an actual PSFCH transmission resource includes one common IRB and a first quantity of dedicated PRBs, that is, only dedicated PRBs are considered herein) included in a PSFCH resource (only dedicated PRBs are considered and common IRBs are not included herein) of a single slot in the resource pool is an integer multiple of 2 (1*2 = 2). For example, a quantity of first PSFCH candidate frequency domain resources configured for a single slot is 2, 4, or 6. It may be understood that a quantity of complete PSFCH candidate frequency domain resources configured for a single slot is 2, 4, or 6. Each PSFCH candidate frequency domain resource includes a first PSFCH candidate frequency domain resource and one common IRB, and different PSFCH candidate frequency domain resources correspond to a same common IRB (or different PSFCH candidate frequency domain resources located in a same RB set correspond to a same common IRB).

As shown in FIG. 2, PSFCH resources configured for a single slot (FIG. 2 shows only dedicated PRBs in the PSFCH resources, and does not show the common IRB) are PRBs that correspond to 1 in a bitmap (Bitmap). It can be learned that dedicated PRBs configured for a PSFCH include two first PSFCH candidate frequency domain resources, which are PRB#0+PRB#5 and PRB#4+PRB#9, respectively. Each first PSFCH candidate resource occupies two consecutive PRBs in a same IRB. PRB#0 and PRB#5 are two neighboring PRBs (spaced by five PRBs) in IRB#0, and PRB#4 and PRB#9 are two neighboring PRBs (spaced by five PRBs) in IRB#4.

Case 2: neighboring PRBs in a same IRB except a PRB that is not allowed to be used for PSFCH transmission and/or PSFCH reception. Herein, the PRB that is not allowed to be used for PSFCH transmission and/or PSFCH reception specifically refers to a PRB that corresponds to 0 in the bitmap or a PRB that is not allowed to be used for PSFCH transmission and/or PSFCH reception. With reference to FIG. 3, the following describes the case 2 by using an example.

It is assumed that the quantity of sub-channels in the resource pool is 3, and the PSFCH resource period is one slot. Therefore, a quantity of first PSFCH candidate frequency domain resources (each first PSFCH candidate frequency domain resource includes a first quantity of dedicated PRBs, and an actual complete PSFCH transmission resource includes one common IRB and a first quantity of dedicated PRBs, that is, only dedicated PRBs are considered herein) of a single slot is an integer multiple of 3 (1*3 = 3). For example, a quantity of first PSFCH candidate frequency domain resources configured for a single slot is 3, 6, or 9. It may be understood that a quantity of complete PSFCH candidate frequency domain resources configured for a single slot is 3, 6, or 9. Each PSFCH candidate frequency domain resource includes a first PSFCH candidate frequency domain resource and one common IRB, and different PSFCH candidate frequency domain resources correspond to a same common IRB (or different PSFCH candidate frequency domain resources located in a same RB set correspond to a same common IRB).

As shown in FIG. 3, PSFCH resources configured for a single slot (FIG. 3 shows only dedicated PRBs in the PSFCH resources, and does not show the common IRB) are PRBs that correspond to 1 in a bitmap. It can be learned that dedicated PRBs configured for a PSFCH include three PSFCH candidate resources. Each PSFCH candidate resource occupies two consecutive PRBs in a same IRB except an unavailable PRB (a PRB that is set to 0 in the bitmap). Therefore, PRBs available for PSFCH transmission in FIG. 3 are PRB#0, PRB#2, PRB#4, PRB#7, PRB#10, and PRB#14, respectively. PRB#0, PRB#5, and PRB#10 are located in the same IRB#0, but PRB#5 is unavailable. Therefore, PRB#0 and PRB#10 are consecutive PRBs located in the same IRB (IRB#0) except PRB#5. Similarly, because PRB#9 is unavailable, PRB#4 and PRB#14 are consecutive PRBs located in the same IRB (IRB#4) except PRB#9. In addition, PRB#2 and PRB#7 are also consecutive PRBs located in the same IRB (IRB#2), and there are no unavailable PRBs in the same IRB between the two PRBs. Therefore, the slot includes three PSFCH candidate resources, which are PRB#0+PRB#10, PRB#2+PRB#7, and PRB#4+PRB#14, respectively.

In another specific implementation, PRBs that are allowed to be used for PSFCH transmission and/or PSFCH reception and that are configured in any RB set in the target RB set include a third quantity of first PSFCH candidate frequency domain resources. As described above, the target RB set may be any one or more RB sets in the resource pool (as a special example, the plurality of RB sets may refer to all the RB sets in the resource pool). Alternatively, the target RB set is the RB set indicated by the first indication information. In addition, the first PSFCH candidate frequency domain resource herein is, for example, a first quantity of PRBs (which, for example, is specifically a first quantity of dedicated PRBs). For example, the PRB that is allowed to be used for PSFCH transmission and/or PSFCH reception including the third quantity of first PSFCH candidate frequency domain resources may be understood as: the PRB that is allowed to be used for PSFCH transmission and/or PSFCH reception may constitute or form the third quantity of first PSFCH candidate frequency domain resources. The third quantity of the first PSFCH candidate frequency domain resource meets at least one of the following conditions:

the third quantity is an integer multiple of a product of a PSFCH resource period and a quantity of sub-channels in any RB set in the target RB set, where in particular, the integer multiple may be 1, that is, the third quantity is a product of the PSFCH resource period and a quantity of sub-channels in any RB set in the target RB set;
the third quantity is a positive integer; or
the first PSFCH candidate frequency domain resource includes a first quantity of PRBs, where the first quantity of PRBs meet a first condition. Herein, the first quantity is a quantity of PRBs (dedicated PRBs) that need to be occupied by a single time of PSFCH transmission.

Specifically, the first condition includes at least one of the following three conditions: being located in one RB set, being located in a same IRB, or being located in consecutive PRBs in a same IRB.

More specifically, the being located in consecutive PRBs in a same IRB includes any one of the following cases:

(1) neighboring PRBs in a same IRB, that is, any two neighboring or consecutive PRBs that are spaced by M PRBs, where M is determined by a subcarrier spacing. For example, if the subcarrier spacing is 15 kHz, M is 10; or if the subcarrier spacing is 30 kHz, M is 5. With reference to FIG. 4, the following describes this case by using an example.

It is assumed that the resource pool includes two RB sets, each RB set includes five sub-channels (each sub-channel includes one IRB located in one RB set), and the PSFCH resource period is one slot. Therefore, a quantity of first PSFCH candidate frequency domain resources included in each RB set (each first PSFCH candidate frequency domain resource includes a first quantity of dedicated PRBs, and an actual PSFCH transmission resource includes one common IRB and a first quantity of dedicated PRBs, that is, only dedicated PRBs are considered herein) is an integer multiple of 5 (1*5 = 5). For example, a quantity of PSFCH candidate resources included in each RB set may be 5 or 10. It may be understood that a quantity of complete PSFCH candidate frequency domain resources configured in each RB set for a single slot is 5 or 10. Each PSFCH candidate frequency domain resource includes a first PSFCH candidate frequency domain resource and one common IRB, and different PSFCH candidate frequency domain resources correspond to a same common IRB (or different PSFCH candidate frequency domain resources located in a same RB set correspond to a same common IRB). In addition, quantities of (first) PSFCH candidate frequency domain resources in different RB sets may be required to be the same, or quantities of (first) PSFCH candidate frequency domain resources in different RB sets may be allowed to be the same or different. For example, a quantity of (first) PSFCH candidate frequency domain resources configured for a first RB set is 5, and a quantity of (first) PSFCH candidate frequency domain resources configured for a second RB set is 10.

As shown in FIG. 4, a quantity of PRBs included in a single RB set is 50 (guard band (Guard band) PRBs configured in the two RB sets are not considered herein). PSFCH resources (as shown in FIG. 4, the PSFCH resources herein refer to only dedicated PRBs, and common IRBs are not shown herein) are PRBs that correspond to 1 in a bitmap. It can be learned that dedicated PRBs configured for a PSFCH in each RB set include five first PSFCH candidate frequency domain resources. First PSFCH candidate frequency domain resources included in RB set#0 are PRB#0+PRB#5, PRB#1+PRB#6, PRB#2+PRB#7, PRB#3+PRB#8, and PRB#4+PRB#9, and first PSFCH candidate frequency domain resources included in RB set#1 are PRB#50+PRB#55, PRB#51+PRB#56, PRB#52+PRB#57, PRB#53+PRB#58, and PRB#54+PRB#59. Each first PSFCH candidate frequency domain resource occupies two consecutive PRBs in a same IRB in a same RB set. For example, PRB#0 and PRB#5 are two neighboring or consecutive PRBs (spaced by five PRBs) in IRB#0 in RB set#0, and PRB#4 and PRB#9 are two neighboring or consecutive PRBs (spaced by five PRBs) in IRB#4 in RB set#0.

(2) neighboring PRBs in a same IRB except a PRB that is not allowed to be used for PSFCH transmission and/or PSFCH reception.

Optionally, the first IRB that is allowed to be used for PSFCH transmission and/or PSFCH reception and that is indicated by the third indication information is any one of the following:

a first IRB or a first IRB set that is allowed to be used for PSFCH transmission and/or PSFCH reception and that is included in the resource pool; or

a first IRB or a first IRB set that is allowed to be used for PSFCH transmission and/or PSFCH reception and that is included in a target RB set, where the target RB set may be any one or more RB sets in the resource pool (as a special example, the plurality of RB sets may refer to all the RB sets in the resource pool). Alternatively, the target RB set is the RB set indicated by the first indication information.

It should be noted herein that, in a subsequent process of determining the target PSFCH resource in a case that the first IRB or the first IRB set that is allowed to be used for PSFCH transmission and/or PSFCH reception and that is indicated by the third indication information is a PRB that is allowed to be used for PSFCH transmission and/or PSFCH reception and that is included in the resource pool, the PSFCH resource may be determined at a granularity of an RB set, that is, the PSFCH resource may be determined with respect to each RB set.

It should be further noted herein that, that the first IRB indicated by the third indication information as being allowed to be used for PSFCH transmission and/or PSFCH reception refers to: the first IRB indicated by the third indication information can be used for PSFCH transmission and/or PSFCH reception. However, the first IRB indicated by the third indication information is not necessarily used for PSFCH transmission and/or PSFCH reception. For example, the first IRB indicated by the third indication information is finally used to transmit another signal. For example, the another signal is a PSFCH-like signal (PSFCH-like signal).

When the first IRB is a common IRB, the PRB (dedicated PRB) that is used for PSFCH transmission and/or PSFCH reception and that is indicated by the second indication information are located in a same RB set as the first IRB. For example, the common IRB is configured in RB set#1 and RB set#2. In this case, dedicated PRBs need to be further configured in RB set#1 and RB set#2.

In addition, the common IRB in the resource pool includes one or more common IRBs (for example, one common IRB is configured in each RB set). One common IRB and one first PSFCH candidate frequency domain resource (that is, a first quantity of PRBs) constitute one complete PSFCH transmission candidate resource, and the common IRB and the PSFCH candidate frequency domain resource that correspond to the one complete PSFCH transmission candidate resource are located in a same RB set.

Herein, it should be noted that if the first IRB is a common IRB, the first IRB may be pre-defined. For example, IRB#0 in the resource pool is directly pre-defined as a common IRB.

In an optional implementation, the second IRB that is allowed to be used for PSFCH transmission and/or PSFCH reception and that is indicated by the fourth indication information is any one of the following:

a second IRB that is allowed to be used for PSFCH transmission and/or PSFCH reception and that is included in the resource pool; or
a second IRB that is allowed to be used for PSFCH transmission and/or PSFCH reception and that is included in a target RB set.

The target RB set may be any one or more RB sets in the resource pool (as a special example, the plurality of RB sets may refer to all the RB sets in the resource pool). Alternatively, the target RB set is the RB set indicated by the first indication information. In other words, the target RB set is one or more RB sets each including a PSFCH resource. For example, if the PSFCH resource indication information includes the first indication information, the target RB set is the RB set indicated by the first indication information. Alternatively, if the PSFCH resource indication information does not include the first indication information, the target RB set may be any one or more RB sets or all the RB sets in the resource pool.

It should be noted herein that, in a subsequent process of determining the target PSFCH resource in a case that the second IRB that is allowed to be used for PSFCH transmission and/or PSFCH reception and that is indicated by the fourth indication information is a PRB that is allowed to be used for PSFCH transmission and/or PSFCH reception and that is included in the resource pool, the PSFCH resource may be determined at a granularity of an RB set, that is, the PSFCH resource may be determined with respect to each RB set.

For example, when PSFCH resource configuration and resource mapping are performed with respect to the entire resource pool, the second IRB indicated by the fourth indication information may be a second IRB allowed to be used for PSFCH transmission and/or PSFCH reception in the resource pool. When PSFCH resource configuration and resource mapping are performed with respect to each RB set (one resource pool includes one or more RB sets), the second IRB indicated by the fourth indication information is a second IRB allowed to be used for PSFCH transmission and/or PSFCH reception in a specific RB set (the target RB set).

In a specific implementation, second IRBs that are allowed to be used for PSFCH transmission and/or PSFCH reception and that are included in the resource pool include a fourth quantity of PSFCH candidate resources. Similarly, for example, the second IRB that is allowed to be used for PSFCH transmission and/or PSFCH reception including the fourth quantity of PSFCH candidate resources may be understood as: the second IRB that is allowed to be used for PSFCH transmission and/or PSFCH reception may constitute or form the fourth quantity of PSFCH candidate resources. The PSFCH candidate resource meets a second condition. Specifically, the second condition includes any one of the following.

The second condition includes being located at one IRB in one RB set. For example, a single time of PSFCH transmission occupies one IRB located in one RB set. As shown in FIG. 5, two PSFCH candidate (frequency domain) resources may be determined based on PSFCH resources configured in a bitmap, and are IRB#0 (including 10 PRBs) located in RB set#0 and IRB#1 (including 10 PRBs) located in RB set#1, respectively.

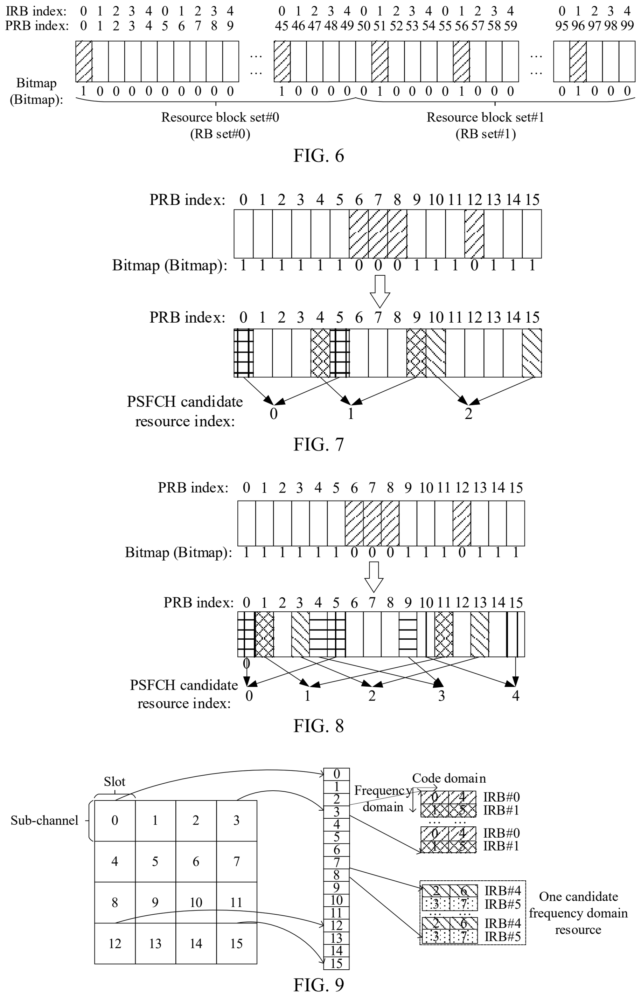

Alternatively, the second condition includes being located at PRBs in one IRB in one RB set except a PRB that is not allowed to be used for PSFCH transmission and/or PSFCH reception. For example, a single time of PSFCH transmission occupies one IRB located in one RB set. As shown in FIG. 6, two PSFCH candidate resources may be determined based on PSFCH resources configured in a bitmap, and are a remaining part (including nine PRBs) located in IRB#0 in RB set#0 except PRB#5, and IRB#1 (including 10 PRBs) located in RB set#1, respectively.

Additionally or alternatively, the fourth quantity meets at least one of the following conditions:

the fourth quantity is an integer multiple of a product of a PSFCH resource period and a quantity of sub-channels in the resource pool (a total quantity of sub-channels included in all the RB sets in the resource pool, that is, a product of a quantity of sub-channels included in a single RB set and a quantity of the RB sets included in the resource pool), where in particular, the integer multiple may be 1, that is, the fourth quantity is a product of the PSFCH resource period and the quantity of sub-channels in the resource pool; and it should be noted herein that if one sub-channel includes two IRBs located in one RB set, the PSFCH resource period may be set to 1 or 2, or if one sub-channel includes one IRB located in one RB set, the PSFCH resource period can be set to 1 only;
the fourth quantity is a positive integer; or

the fourth quantity is a product of a quantity of the RB sets in the resource pool and a quantity of IRBs included in a single RB set, that is, a frequency domain range of a PSFCH resource is the entire resource pool.

In another specific implementation, second IRBs that are allowed to be used for PSFCH transmission and/or PSFCH reception and that are included in any RB set in the target RB set include a fifth quantity of PSFCH candidate resources. As described above, the target RB set may be any one or more RB sets in the resource pool (as a special example, the plurality of RB sets may refer to all the RB sets in the resource pool). Alternatively, the target RB set is the RB set indicated by the first indication information.

The PSFCH candidate resource meets a second condition. As described above, the second condition includes: being located at one IRB in one RB set, and/or being located at PRBs in one IRB in one RB set except a PRB that is not allowed to be used for PSFCH transmission and/or PSFCH reception. An example of the second condition is not described in detail herein.

Additionally or alternatively, the fifth quantity meets at least one of the following conditions:

the fifth quantity is an integer multiple of a product of a PSFCH resource period and a quantity of sub-channels in any RB set in the target RB set, where in particular, the integer multiple may be 1, that is, the fifth quantity is a product of the PSFCH resource period and a quantity of sub-channels in any RB set in the target RB set;

the fifth quantity is a positive integer; for example, if a subcarrier spacing is 15 kHz, the fifth quantity is 10; or if the subcarrier spacing is 30 kHz, the fifth quantity is 5, that is, a PSFCH resource configuration range is the entire target RB set; or

the fifth quantity is a quantity of IRBs included in any RB set in the target RB set.

Herein, it should be emphasized that PSFCH candidate resources in the fourth quantity of PSFCH candidate resources or the fifth quantity of PSFCH candidate resources described above may be in the following two cases. In a case 1, the PSFCH candidate resources are PSFCH candidate frequency domain resources, that is, only a frequency domain is considered. In a case 2, the PSFCH candidate resources include frequency domain resources and code domain resources. For example, code domain enhancement such as cyclic shift is performed on one PSFCH candidate frequency domain resource, so that five UEs may share the frequency domain resource. For the case 2, Fourth quantity or Fifth quantity = Quantity of PSFCH candidate frequency domain resources * Maximum multiplexing capacity of a single candidate frequency domain resource.

Further, in an optional implementation, before the determining the target PSFCH resource based on the PSFCH resource indication information in Step 102, the method further includes at least one of the following:

determining a quantity of PSFCH candidate resources; it should be noted herein that if a structure of a PSFCH resource is one first IRB (for example, a common IRB) and a first quantity of PRBs (for example, dedicated PRBs), the PSFCH candidate resource refers to only the first quantity of PRBs, that is, the PSFCH candidate resource is the first PSFCH candidate frequency domain resource; it may be further understood that a PSFCH candidate resource is a complete PSFCH candidate resource corresponding to PSFCH transmission, that is, a single PSFCH candidate resource includes one first IRB and a first quantity of PRBs; in this case, a quantity of PSFCH candidate resources is equal to a quantity of first PSFCH candidate frequency domain resources; if a structure of a PSFCH resource is one second IRB (for example, a dedicated IRB), the PSFCH candidate resource refers to a complete PSFCH resource, that is, one second IRB;

determining a correspondence between a PSFCH candidate resource and physical sidelink shared channel PSSCH slot and sub-channel, where a PSSCH slot refers to a slot related to a PSFCH candidate resource; or

determining a PSFCH candidate resource set, where the PSFCH candidate resource set is a PSFCH candidate resource set corresponding to a received PSSCH, and the PSFCH candidate resource set is a set of PSFCH candidate frequency domain resources, or a set of PSFCH candidate frequency domain resources and PSFCH candidate code domain resources (for example, if there are two frequency domain resources and four code domain resources, a final PSFCH candidate resource set includes eight PSFCH candidate resources).

As a specific example, this optional implementation may be as follows: first, a quantity of PSFCH candidate resources is determined; second, a correspondence between a PSFCH candidate resource and physical sidelink shared channel PSSCH slot and sub-channel is determined based on the quantity of PSFCH candidate resources; then, a PSFCH candidate resource set is determined based on the correspondence; and finally, the target PSFCH resource is determined based on the PSFCH candidate resource set.

In an optional implementation, the determining the quantity of PSFCH candidate resources includes: determining the quantity of PSFCH candidate resources based on a third condition related to the PSFCH candidate resources and the PSFCH resource indication information, where the third condition is any one of the following.

One PSFCH candidate resource includes one first IRB and a first PSFCH candidate resource, where the first PSFCH candidate resource is a first quantity of PRBs. Herein, the first IRB is, for example, a common IRB, and the first quantity of PRBs is, for example, a first quantity of dedicated PRBs. In other words, a structure of a PSFCH candidate resource is one first IRB and a first quantity of PRBs. For example, N first PSFCH candidate resources that meet the first condition may be determined in one PSFCH slot based on the second indication information in the resource pool, and each first PSFCH candidate resource corresponds to one common IRB. Therefore, a quantity of PSFCH candidate resources included in the slot is N. In addition, the determining the quantity of PSFCH candidate resources herein may be further understood as: determining a quantity of first PSFCH candidate (frequency domain) resources. That is, N PSFCH candidate resources that meet the first condition may be determined in one PSFCH slot based on the second indication information in the resource pool. Each PSFCH candidate resource corresponds to one common IRB. Therefore, a quantity of determined complete PSFCH candidate resources (including one first IRB and a first PSFCH candidate resource) is equal to a quantity of first PSFCH candidate resources.

Alternatively, one PSFCH candidate resource includes one second IRB. Herein, the second IRB is, for example, a dedicated IRB, that is, a structure of a PSFCH candidate resource is one second IRB.

Based on this, this optional implementation is specifically: determining a quantity of PSFCH candidate resources based on a structure of the PSFCH candidate resources and the PSFCH resource indication information.

In a specific implementation, the first PSFCH candidate resources meet the first condition. As described above, the first condition includes at least one of the following: being located in one RB set; being located in a same IRB; or being located in consecutive PRBs in a same IRB. Specifically, in a case that the first condition includes being located in consecutive PRBs in a same IRB, the first PSFCH candidate resource includes: a first quantity of neighboring PRBs in a same IRB; or a first quantity of neighboring PRBs in a same IRB except a PRB that is not allowed to be used for PSFCH transmission and/or PSFCH reception.

For a specific example of a first quantity of neighboring PRBs in a same IRB, as shown in FIG. 7, PSFCH resources (which refer to a first quantity of PRBs (dedicated PRBs) herein and do not include common IRBs) configured for a single slot are PRBs that correspond to 1 in a bitmap. In a case that a single time of PSFCH transmission occupies one common IRB and two dedicated PRBs, candidate resources (first PSFCH candidate frequency domain resources) that meet a requirement in a PRB configured for the PSFCH need to be first determined. In this example, only a process of determining a dedicated PRB is described: a quantity of the candidate resources that meet the requirement is determined in ascending order of PRB indexes. The requirement herein includes that: two dedicated PRBs are two consecutive PRBs located in a same IRB. "Consecutive PRBs" refer to consecutive PRBs (any two consecutive PRBs with a spacing of M, where M is determined by a subcarrier spacing, and a value of M may be 10 or 5) located in a same IRB.

By definition, PRB#0, PRB#5, PRB#10, and PRB#15 are located in a same IRB. It is assumed that a quantity of dedicated PRBs occupied by a single time of PSFCH transmission is 2. Either PRB#0 and PRB#5 or PRB#10 and PRB#15 may be referred to as two consecutive PRBs in a same IRB. Therefore, PRB#0+PRB#5 is a PSFCH candidate resource, and PRB#10+PRB#15 is a PSFCH candidate resource. However, because PRB#6 is not a PRB configured for PSFCH transmission and/or PSFCH reception, PRB#1+PRB#6 cannot be used as a candidate resource. In addition, because PRB#1+PRB#11 does not meet the definition of consecutive PRBs, PRB#1+PRB#11 cannot be used as a PSFCH candidate resource either. It can be learned based on the foregoing principle that, the slot includes three PSFCH candidate resources, which are PRB#0+PRB#5, PRB#4+PRB#9, and PRB#10+PRB#15, respectively.

In a specific example of a first quantity of neighboring PRBs in a same IRB except a PRB that is not allowed to be used for PSFCH transmission and/or PSFCH reception, it is assumed that a single time of PSFCH transmission occupies two dedicated PRBs. As shown in FIG. 8, PRB#0 and PRB#5 are neighboring PRBs located in a same IRB. Therefore, PRB#0+PRB#5 is a PSFCH candidate resource. For PRB#1, PRB#6, and PRB#11, PRB#6 is an unavailable PRB, and PRB#1 and PRB#11 are two consecutive PRBs in IRB#1 except the unavailable PRB#6. Therefore, PRB#1+PRB#11 is a PSFCH candidate resource. Other PSFCH candidate resources can be determined in a similar manner. Therefore, the slot includes five PSFCH candidate resources, which are PRB#0+PRB#5, PRB#1+PRB#11, PRB#3+PRB#13, PRB#4+PRB#9, and PRB#10+PRB#15, respectively.

In another specific implementation, in a case that the third condition is that one PSFCH candidate resource includes one second IRB, the PSFCH candidate resources meet the second condition.

As described above, the second condition includes any one of the following:

being located at one IRB in one RB set; or
being located at PRBs in one IRB in one RB set except a PRB that is not allowed to be used for PSFCH transmission.

In an optional implementation, in a case that the third condition is that one PSFCH candidate resource includes one first IRB and a first PSFCH candidate resource, the determining the correspondence between a PSFCH candidate resource and physical sidelink shared channel PSSCH slot and sub-channel includes at least one of the following:

(1) determining, based on a PSFCH resource period, a quantity of sub-channels in the resource pool, and a quantity of first PSFCH candidate resources or PSFCH candidate resources in the resource pool, a quantity of first PSFCH candidate resource or PSFCH candidate resources corresponding to one sub-channel in one PSSCH slot, where the first PSFCH candidate resource may be specifically a first PSFCH candidate frequency domain resource, and the PSFCH candidate resource is a complete candidate resources corresponding to a single time of PSFCH transmission, and includes one common IRB and a first PSFCH candidate resource. This step may be represented by the following formula:

$$M_{subCH, slot} = M_{Resorce\ set}/(N_{subch} * N_{PSFCH,\ PSSCH}),$$

or

$$M_{subCH,\ slot} = \left\lfloor M_{Resorce\ set}/(N_{subch} * N_{PSFCH,\ PSSCH}) \right\rfloor,$$

or

$$M_{subCH,\ slot} = \left\lceil M_{Resorce\ set}/(N_{subch} * N_{PSFCH,\ PSSCH}) \right\rceil,$$

where

$M_{subCH,\ slot}$ represents a quantity of first PSFCH candidate resources or PSFCH candidate resources corresponding to one sub-channel in one PSSCH slot;
$M_{Resorce\ set}$ represents a total quantity of first PSFCH candidate resources or PSFCH candidate resources in one slot in the resource pool;
$N_{subch}$ represents the quantity of sub-channels in the resource pool; and
$N_{PSFCH,\ PSSCH}$ represents the PSFCH resource period.

As shown in FIG. 9, a specific example of this step is as follows: a PSFCH resource period is four slots, that is, sub-channels of four slots correspond to PSFCH resources of one slot, each slot includes four sub-channels, and 32 first PSFCH candidate (frequency domain) resources or PSFCH candidate resources that meet the first condition are configured in frequency domain, where each first PSFCH candidate frequency domain resource includes two consecutive PRBs located in one IRB. Therefore, each sub-channel corresponds to two (32/(4*4) = 2) first PSFCH candidate (frequency domain) resources or two PSFCH candidate resources. The time-domain-first mapping principle is applied during mapping. That is, the first sub-channel in the first slot corresponds to the two lowest first PSFCH candidate (frequency domain) resources or lowest PSFCH candidate resources in frequency domain, and the first sub-channel in the second slot corresponds to the next two first PSFCH candidate (frequency domain) resources or PSFCH candidate resources. The rest can be deduced by analogy.

If sub-channels occupied by a PSSCH are the first sub-channel and the second sub-channel in the fourth slot (that is, sub-channels numbered 3 and 7 in FIG. 9), first PSFCH candidate frequency domain resources corresponding to a sub-channel 3 are two consecutive PRBs in IRB#0 and two consecutive PRBs in IRB#1; and first PSFCH candidate frequency domain resources corresponding to a sub-channel 7 are two consecutive PRBs in IRB#4 and two consecutive PRBs in IRB#5.

(2) for any RB set, determining, based on a PSFCH resource period, a quantity of sub-channels in the RB set, and a quantity of first PSFCH candidate resources or PSFCH candidate resources in the RB set, a quantity of first PSFCH candidate resources or PSFCH candidate resources corresponding to one sub-channel in one PSSCH slot in the RB set. Herein, the first PSFCH candidate resource is, for example, a first PSFCH candidate frequency domain resource. The PSFCH candidate resource is a complete candidate resource corresponding to a single time of PSFCH transmission, and includes one common IRB and a first PSFCH candidate resource. This step may be determined based on the following formula:

$$M_{subCH, slot} = M_{Resorce\ set}/(N_{subch} * N_{PSFCH, PSSCH}),$$

or

$$M_{subCH, slot} = \left\lfloor M_{Resorce\ set}/(N_{subch} * N_{PSFCH, PSSCH}) \right\rfloor,$$

or

$$M_{subCH, slot} = \left\lceil M_{Resorce\ set}/(N_{subch} * N_{PSFCH, PSSCH}) \right\rceil,$$

where

$M_{subCH, slot}$ represents a quantity of first PSFCH candidate frequency domain resources or PSFCH candidate resources corresponding to one sub-channel in one PSSCH slot;
$M_{Resorce\ set}$ represents a total quantity of PSFCH candidate frequency domain resources or PSFCH candidate resources in the RB set in one slot;
$N_{subch}$ represents a quantity of sub-channels in the RB set in one slot; and
$N_{PSFCH, PSSCH}$ represents the PSFCH resource period.

(3) determining, based on a PSFCH resource period, a quantity of sub-channels in the resource pool, a quantity of first PSFCH candidate resources or PSFCH candidate resources in the resource pool, and a quantity of multiplexed PSFCHs supported by a single PSFCH candidate resource, a quantity of first PSFCH candidate resources or PSFCH candidate resources corresponding to one sub-channel in one PSSCH slot. The candidate resources in this step include frequency domain resources and code domain resources. That is, different candidate resources occupy different frequency domains and same code domains, or different candidate resources occupy same frequency domains and different code domains, or different candidate resources occupy different frequency domains and different code domains.

Herein, it should be noted that a manner of implementing multiplexing includes code domain enhancement, such as cyclic shift, cyclic shift hopping (Hopping), or cyclic shift at a PRB level. Therefore, the quantity of multiplexed PSFCHs is, for example, a quantity of cyclic shift pairs, a quantity of times of cyclic shift hopping, or a quantity of times of cyclic shift at a PRB level.
This step may be determined based on the following formula:

$$M_{subCH, slot} = (M_{Resorce\ set} * Y)/(N_{subch} * N_{PSFCH, PSSCH}),$$

or

$$M_{subCH, slot} = \left\lfloor (M_{Resorce\ set} * Y)/(N_{subch} * N_{PSFCH, PSSCH}) \right\rfloor,$$

or

$$M_{subCH, slot} = \left\lceil (M_{Resorce\ set} * Y)/(N_{subch} * N_{PSFCH, PSSCH}) \right\rceil,$$

where

$M_{subCH, slot}$ represents a quantity of first PSFCH candidate resources or PSFCH candidate resources corresponding to one sub-channel in one PSSCH slot;

$M_{Resorce\ set}$ represents a total quantity of first PSFCH candidate frequency domain resources or PSFCH candidate frequency domain resources in one slot in the resource pool;

Y represents a quantity of multiplexed PSFCHs (or a quantity of cyclic shift pairs) that can be supported by a single PSFCH candidate frequency domain resource;

$N_{subch}$ represents the quantity of sub-channels in the resource pool; and

$N_{PSFCH, PSSCH}$ represents the PSFCH resource period.

(4) for any RB set, determining, based on a PSFCH resource period, a quantity of sub-channels in the RB set, a quantity of first PSFCH candidate resources or PSFCH candidate resources in the RB set, and a quantity of multiplexed PSFCHs supported by a single (first) PSFCH candidate resource, a quantity of first PSFCH candidate resources or PSFCH candidate resources corresponding to one sub-channel in one PSSCH slot in the RB set. The first PSFCH candidate resources in this step include frequency domain resources and code domain resources. That is, different candidate resources occupy different frequency domains and same code domains, or different candidate resources occupy same frequency domains and different code domains, or different candidate resources occupy different frequency domains and different code domains.

Herein, it should be noted that a manner of implementing multiplexing includes code domain enhancement, such as cyclic shift, cyclic shift hopping (Hopping), or cyclic shift at a PRB level. Therefore, the quantity of multiplexed PSFCHs is, for example, a quantity of cyclic shift pairs, a quantity of times of cyclic shift hopping, or a quantity of times of cyclic shift at a PRB level.

This step may be determined based on the following formula:

$$M_{subCH, slot} = (M_{Resorce\ set} * Y)/(N_{subch} * N_{PSFCH, PSSCH}),$$

or

$$M_{subCH, slot} = \left\lfloor (M_{Resorce\ set} * Y)/(N_{subch} * N_{PSFCH, PSSCH}) \right\rfloor,$$

or

$$M_{subCH, slot} = \left\lceil (M_{Resorce\ set} * Y)/(N_{subch} * N_{PSFCH, PSSCH}) \right\rceil,$$

where

$M_{subCH, slot}$ represents a quantity of first PSFCH candidate resources or PSFCH candidate resources corresponding to one sub-channel in one PSSCH slot;

$M_{Resorce\ set}$ represents a total quantity of first PSFCH candidate frequency domain resources or PSFCH candidate resources in the RB set in one slot;

Y represents a quantity of multiplexed PSFCHs (or a quantity of cyclic shift pairs) that can be supported by a single PSFCH candidate frequency domain resource;

$N_{subch}$ represents a quantity of sub-channels in the RB set in one slot; and

$N_{PSFCH, PSSCH}$ represents the PSFCH resource period.

(5) determining, based on a PSFCH resource period, a quantity of sub-channels in the resource pool, and a quantity of PRBs configured for PSFCH transmission and/or PSFCH reception in the resource pool, a quantity of PRBs included in a PSFCH candidate resource set corresponding to one sub-channel in one PSSCH slot. Herein, the first PSFCH candidate resource may be specifically a candidate frequency domain resource. This step may be represented by the following formula:

$$M_{\text{subCH, slot}} = M_{\text{Resorce set}} / (N_{\text{subch}} * N_{\text{PSFCH, PSSCH}}),$$

or

$$M_{\text{subCH, slot}} = \lfloor M_{\text{Resorce set}} / (N_{\text{subch}} * N_{\text{PSFCH, PSSCH}}) \rfloor,$$

or

$$M_{\text{subCH, slot}} = \lceil M_{\text{Resorce set}} / (N_{\text{subch}} * N_{\text{PSFCH, PSSCH}}) \rceil,$$

where

$M_{\text{subCH, slot}}$ represents a quantity of PRBs included in a PSFCH candidate resource set corresponding to one sub-channel in one PSSCH slot;
$M_{\text{Resorce set}}$ represents a total quantity of PRBs used for PSFCH transmission and/or PSFCH reception in one slot;
$N_{\text{subch}}$ represents a quantity of sub-channels in one slot; and
$N_{\text{PSFCH, PSSCH}}$ represents the PSFCH resource period.

In another optional implementation, in a case that the third condition is that one PSFCH candidate resources includes one second IRB, the determining the correspondence between a PSFCH candidate resource and physical sidelink shared channel PSSCH slot and sub-channel includes at least one of the following:

(1) determining, based on a PSFCH resource period, a quantity of sub-channels in a resource pool, and a quantity of PSFCH candidate resources in the resource pool, a quantity of PSFCH candidate resources corresponding to one sub-channel in one PSSCH slot, where the PSFCH candidate resource is a second IRB, and the PSFCH candidate resource may be referred to as a PSFCH candidate frequency domain resource. This step may be represented by the following formula:

$$M_{\text{subCH, slot}} = M_{\text{Resorce set}} / (N_{\text{subch}} * N_{\text{PSFCH, PSSCH}}),$$

or

$$M_{\text{subCH, slot}} = \lfloor M_{\text{Resorce set}} / (N_{\text{subch}} * N_{\text{PSFCH, PSSCH}}) \rfloor,$$

or

$$M_{\text{subCH, slot}} = \lceil M_{\text{Resorce set}} / (N_{\text{subch}} * N_{\text{PSFCH, PSSCH}}) \rceil,$$

where

$M_{\text{subCH, slot}}$ represents a quantity of PSFCH candidate (frequency domain) resources corresponding to one sub-channel in one PSSCH slot;
$M_{\text{Resorce set}}$ represents a total quantity of candidate resources used for PSFCH transmission in one slot in the resource pool (that is, a quantity of PSFCH candidate frequency domain resources in the resource pool);
$N_{\text{subch}}$ represents a quantity of sub-channels in one slot; and
$N_{\text{PSFCH, PSSCH}}$ represents the PSFCH resource period.

(2) determining, based on a PSFCH resource period, a quantity of sub-channels in the resource pool, and a quantity of PSFCH candidate resources in the resource pool, a quantity of sub-channels corresponding to one PSFCH candidate resource. This step may be represented by the following formula:

$$M_{subCH,\,slot} = N_{subch} * N_{PSFCH,\,PSSCH} / M_{Resorce\,set},$$

or

$$M_{subCH,\,slot} = \left\lfloor N_{subch} * N_{PSFCH,\,PSSCH} / M_{Resorce\,set} \right\rfloor,$$

or

$$M_{subCH,\,slot} = \left\lceil N_{subch} * N_{PSFCH,\,PSSCH} / M_{Resorce\,set} \right\rceil,$$

where

$M_{subCH,\,slot}$ represents a quantity of sub-channels corresponding to one PSFCH candidate resource;
$N_{subch}$ represents a quantity of sub-channels in one slot in the resource pool;
$N_{PSFCH,\,PSSCH}$ represents the PSFCH resource period; and
$M_{Resorce\,set}$ represents a total quantity of PSFCH candidate (frequency domain) resources in one slot in the resource pool.

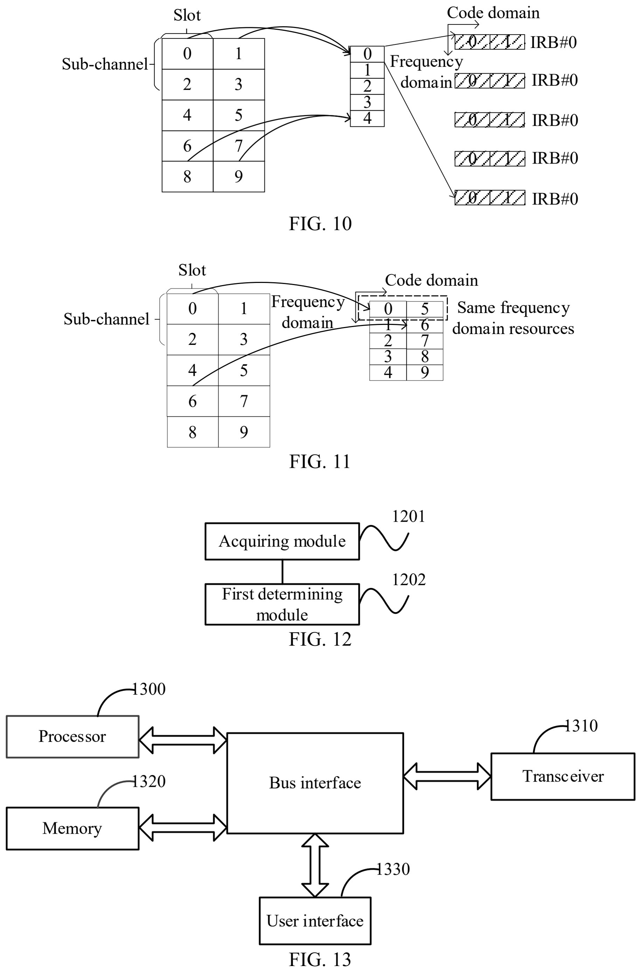

As shown in FIG. 10, a specific example of this step is as follows: PSFCH resources of one slot correspond to sub-channels of PSSCHs of two slots, including five sub-channels in frequency domain, and each PSFCH resource includes one IRB. Therefore, there are five PSFCH candidate (frequency domain) resources in total. In this case, one PSFCH candidate (frequency domain) resource corresponds to two (2*5/5 = 2) sub-channels. Sub-channels numbered 0 and 1 correspond to a PSFCH candidate (frequency domain) resource 0, and sub-channels numbered 2 and 3 correspond to a PSFCH candidate (frequency domain) resource 1. In addition, the PSFCH resources can be multiplexed in code domain, that is, two UEs can use a same PSFCH frequency domain resource. Therefore, a total quantity of PSFCH candidate resources is 5*2 = 10.

(3) for any RB set, determining, based on a PSFCH resource period, a quantity of sub-channels in the RB set, and a quantity of PSFCH candidate resources in the RB set, a quantity of PSFCH candidate resources corresponding to one sub-channel in one PSSCH slot in the RB set. This step may be represented by the following formula:

$$M_{subCH,\,slot} = M_{Resorce\,set} / (N_{subch} * N_{PSFCH,\,PSSCH}),$$

or

$$M_{subCH,\,slot} = \left\lfloor M_{Resorce\,set} / (N_{subch} * N_{PSFCH,\,PSSCH}) \right\rfloor,$$

or

$$M_{subCH,\,slot} = \left\lceil M_{Resorce\,set} / (N_{subch} * N_{PSFCH,\,PSSCH}) \right\rceil,$$

where

$M_{subCH,\,slot}$ represents a quantity of PSFCH candidate (frequency domain) resources corresponding to one sub-channel in the RB set in one PSSCH slot;

$M_{Resorce\,set}$ represents a total quantity of PSFCH candidate (frequency domain) resources in the RB set in one slot;

$N_{subch}$ represents a quantity of sub-channels in the RB set in one slot; and

$N_{PSFCH,\,PSSCH}$ represents the PSFCH resource period.

(4) for any RB set, determining, based on a PSFCH resource period, a quantity of sub-channels in the RB set, and a quantity of PSFCH candidate resources in the RB set, a quantity of sub-channels corresponding to one PSFCH candidate resource in the RB set. This step may be represented by the following formula:

$$M_{subCH,\,slot} = (N_{subch} * N_{PSFCH,\,PSSCH})/M_{Resorce\,set},$$

or

$$M_{subCH,\,slot} = \left\lfloor (N_{subch} * N_{PSFCH,\,PSSCH})/M_{Resorce\,set} \right\rfloor,$$

or

$$M_{subCH,\,slot} = \left\lceil (N_{subch} * N_{PSFCH,\,PSSCH})/M_{Resorce\,set} \right\rceil,$$

where

$M_{subCH,\,slot}$ represents a quantity of sub-channels corresponding to one PSFCH candidate resource in the RB set;

$N_{subch}$ represents a quantity of sub-channels in the RB set in one slot;

$N_{PSFCH,\,PSSCH}$ represents the PSFCH resource period; and

$M_{Resorce\,set}$ represents a total quantity of PSFCH candidate (frequency domain) resources in the RB set in one slot.

(5) determining, based on a PSFCH resource period, a quantity of sub-channels in the resource pool, a quantity of PSFCH candidate resources in the resource pool, and a quantity of multiplexed PSFCHs supported by a single PSFCH candidate frequency domain resource, a quantity of PSFCH candidate resources corresponding to one sub-channel in one PSSCH slot, where the PSFCH candidate resources may be specifically frequency domain resources and code domain resources.

Herein, it should be noted that a manner of implementing multiplexing includes code domain enhancement, such as cyclic shift, cyclic shift hopping (Hopping), or cyclic shift at a PRB level. Therefore, the quantity of multiplexed PSFCHs is, for example, a quantity of cyclic shift pairs, a quantity of times of cyclic shift hopping, or a quantity of times of cyclic shift at a PRB level.

Specifically, this step may be represented by the following formula:

$$M_{subCH,\,slot} = (M_{Resorce\,set} * Y)/(N_{subch} * N_{PSFCH,\,PSSCH}),$$

or

$$M_{subCH, slot} = \left\lfloor (M_{Resorce\ set} * Y)/(N_{subch} * N_{PSFCH,\ PSSCH}) \right\rfloor,$$

or

$$M_{subCH, slot} = \left\lceil (M_{Resorce\ set} * Y)/(N_{subch} * N_{PSFCH,\ PSSCH}) \right\rceil,$$

where

$M_{subCH,\ slot}$ represents a quantity of PSFCH candidate resources corresponding to one sub-channel in one PSSCH slot;

$M_{Resorce\ set}$ represents a total quantity of candidate resources used for PSFCH transmission in one slot in the resource pool (that is, a quantity of PSFCH candidate frequency domain resources in the resource pool);

Y represents a quantity of multiplexed PSFCHs (or a quantity of cyclic shift pairs) that can be supported by a single PSFCH candidate resource;

$N_{subch}$ represents a quantity of sub-channels in one slot; and

$N_{PSFCH,\ PSSCH}$ represents the PSFCH resource period.

In a specific example of this step, as shown in FIG. 11, PSFCH resources of one slot correspond to sub-channels of PSSCHs of two slots, including five sub-channels in frequency domain, and each PSFCH resource includes one IRB. Therefore, there are five PSFCH candidate frequency domain resources in total. In addition, the PSFCH resources can be multiplexed in code domain. Therefore, a total quantity of PSFCH candidate resources is 5*2 = 10.

(6) for any RB set, determining, based on a PSFCH resource period, a quantity of sub-channels in the RB set, a quantity of PSFCH candidate resources in the RB set, and a quantity of multiplexed PSFCHs supported by a single PSFCH candidate frequency domain resource, a quantity of PSFCH candidate resources corresponding to one sub-channel in one PSSCH slot in the RB set. Herein, the PSFCH candidate resources include frequency domain resources and code domain resources.

Herein, it should be noted that a manner of implementing multiplexing includes code domain enhancement, such as cyclic shift, cyclic shift hopping (Hopping), or cyclic shift at a PRB level. Therefore, the quantity of multiplexed PSFCHs is, for example, a quantity of cyclic shift pairs, a quantity of times of cyclic shift hopping, or a quantity of times of cyclic shift at a PRB level.

This step may be represented by the following formula:

$$M_{subCH, slot} = (M_{Resorce\ set} * Y)/(N_{subch} * N_{PSFCH,\ PSSCH}),$$

or

$$M_{subCH, slot} = \left\lfloor (M_{Resorce\ set} * Y)/(N_{subch} * N_{PSFCH,\ PSSCH}) \right\rfloor,$$

or

$$M_{subCH, slot} = \left\lceil (M_{Resorce\ set} * Y)/(N_{subch} * N_{PSFCH,\ PSSCH}) \right\rceil,$$

where

$M_{subCH,\ slot}$ represents a quantity of PSFCH candidate resources corresponding to one sub-channel in one PSSCH slot;

$M_{Resorce\ set}$ represents a total quantity of PSFCH candidate (frequency domain) resources in the RB set in one slot;

Y represents a quantity of multiplexed PSFCHs (or a quantity of cyclic shift pairs) that can be supported by a single PSFCH candidate resource;

$N_{subch}$ represents a quantity of sub-channels in one slot; and

$N_{PSFCH,\ PSSCH}$ represents the PSFCH resource period.

(7) determining, based on a PSFCH resource period, a quantity of sub-channels in the resource pool, and a total quantity of PRBs configured for PSFCH transmission and/or PSFCH reception in the resource pool, a quantity of PRBs included in a PSFCH candidate resource corresponding to one sub-channel in one PSSCH slot. This step may be represented by the following formula:

$$M_{subCH,\ slot} = M_{Resorce\ set}/(N_{subch} * N_{PSFCH,\ PSSCH}),$$

or

$$M_{subCH,\ slot} = \left\lfloor M_{Resorce\ set}/(N_{subch} * N_{PSFCH,\ PSSCH}) \right\rfloor,$$

or

$$M_{subCH,\ slot} = \left\lceil M_{Resorce\ set}/(N_{subch} * N_{PSFCH,\ PSSCH}) \right\rceil,$$

where

$M_{subCH,\ slot}$ represents a quantity of PRBs included in a PSFCH candidate resource corresponding to one sub-channel in one PSSCH slot;

$M_{Resorce\ set}$ represents a total quantity of PRBs used for PSFCH transmission in one slot;

$N_{subch}$ represents a quantity of sub-channels in one slot; and

$N_{PSFCH,\ PSSCH}$ represents the PSFCH resource period.

In still another optional implementation, in a case that the third condition is that one PSFCH candidate resource includes one second IRB, the correspondence between a PSFCH candidate resource and physical sidelink shared channel PSSCH slot and sub-channel includes at least one of the following:

an index of a sub-channel is the same as an index of an IRB corresponding to a PSFCH candidate resource;

an index of a sub-channel is the same as an index of a PSFCH candidate resource; or

an index of an IRB corresponding to a sub-channel is the same as an index of an IRB corresponding to a PSFCH candidate resource.

It should be noted herein that, after a quantity of first PSFCH candidate resources corresponding to one sub-channel in one PSSCH slot or a quantity of sub-channels corresponding to one PSFCH candidate resource is determined based on the plurality of optional implementations described above, a PSFCH candidate resource set corresponding to one sub-channel in one PSSCH slot may be further determined based on the foregoing determined content.

In an optional implementation, the determining the PSFCH candidate resource set includes:

determining, based on a occupied reference sub-channel in a reference RB set corresponding to transmission of a PSSCH, a PSFCH candidate resource set corresponding to the PSSCH.

The reference RB set includes any one of the following:

an RB set with the smallest index among all RB sets corresponding to the transmission of the PSSCH;

an RB set with the largest index among all RB sets corresponding to the transmission of the PSSCH; or

all RB sets corresponding to the transmission of the PSSCH.

Specifically, the reference sub-channel includes any one of the following:

a starting sub-channel of a resource occupied by the transmission of the PSSCH in the reference RB set; or

all sub-channels of a resource occupied by the transmission of the PSSCH in the reference RB set.

FIG. 9 is still used as an example. Based on the foregoing example with reference to FIG. 9, if a PSFCH candidate resource set is determined based on the starting sub-channel, an index of a PSFCH candidate resource set corresponding to the PSSCH is 3; or if a PSFCH candidate resource set is determined based on all the sub-channels, indexes of determined PSFCH candidate resource sets corresponding to the PSSCH are 3 and 7.

In addition, if reference RB sets are all the RB sets corresponding to the transmission of the PSSCH, a first quantity of PRBs that correspond to PSFCH transmission resources and that are determined in different RB sets are located in a same IRB. For example, the PSFCH transmission resource adopts the structure of a common IRB and a first quantity of PRBs. The transmission of the PSSCH occupies RB set#1 and RB set#2, and a PSFCH transmission resource 1 and a PSFCH transmission resource 2 are respectively determined in RB set#1 and RB set#2. A first quantity of PRBs in the PSFCH transmission resource 1 need to be located in a same IRB (for example, IRB#1 or IRB#2), a first quantity of PRBs in the PSFFCH transmission resource 2 need to be located in a same IRB (for example, IRB#1 or IRB#2), and the first quantity of PRBs in the PSFCH transmission resource 1 and the first quantity of PRBs in the PSFCH transmission resource 2 are located in a same IRB (for example, IRB#1 or IRB#2).

Further, in an optional implementation, the determining the PSFCH candidate resource set further includes: screening the determined PSFCH candidate resource set, to obtain a target PSFCH candidate resource set that can be used for PSFCH transmission. In other words, an actually available PSFCH candidate resource set is determined from the PSFCH candidate resource sets corresponding to the PSSCH.

In a specific embodiment, in a case that a PSFCH candidate resource includes a first quantity of PRBs, each PSFCH candidate resource in the target PSFCH candidate resource set includes a first quantity of PRBs, and the first quantity of PRBs meet a first condition.

As described above, the first condition includes at least one of the following three conditions: being located in one RB set, being located in a same IRB, or being located in consecutive PRBs in a same IRB. Specifically, consecutive PRBs in a same IRB include a first quantity of neighboring PRBs in a same IRB; or a first quantity of neighboring PRBs in a same IRB except a PRB that is not allowed to be used for PSFCH transmission.

In another specific implementation, in a case that a PSFCH candidate resource includes one second IRB, each PSFCH candidate resource in the target PSFCH candidate resource set meets a second condition. As described above, the second condition includes any one of the following:

being located at one IRB in one RB set; or
being located at PRBs in one IRB in one RB set except a PRB that is not allowed to be used for PSFCH transmission.

In an optional implementation, in Step 102, the determining the target PSFCH resource includes: determining the target PSFCH resource from the PSFCH candidate resource set based on at least one of the following:

a quantity of candidate resources in the PSFCH candidate resource set;
first identification information, used to indicate a source ID of a layer 1;
second identification information, where in a case that a user equipment (User Equipment, UE) detects that a propagation type indicated in a sidelink control information (Sidelink Control Information, SCI) format (format) 2-A is multicast, the second identification information is an identity of the UE; or, in a case that a UE detects that a propagation type indicated in an SCI format 2-A is not multicast, the second identification information is a first value, for example, the first value is 0;
PSFCH index information, where the PSFCH index information indicates a number of a PSFCH corresponding to the PSSCH;
slot information, indicating an index of a slot of a PSSCH resource in a PSSCH period corresponding to a PSFCH;
a quantity of multiplexed PSFCHs supported by a single PSFCH candidate resource, which, for example, is specifically a quantity of cyclic shift pairs, a quantity of times of cyclic shift hopping, or a quantity of times of cyclic shift at a PRB level supported by a single PSFCH candidate resource; or
RB set information, which refers to index information of an RB set, where the RB set refers to an RB set in which the PSFCH candidate resource is located.

A determining process in this optional implementation may be implemented according to any one of the following formulas:

$$\text{PSFCH\_index} = (K+M) \bmod (L1*Y);$$

$$PSFCH\_index = (K+M+I) \bmod (L1*Y);$$

$$PSFCH\_index = (K+M) \text{ Mode } (L2);$$

or

$$PSFCH\_index = (K+M+I) \bmod (L2),$$

where

L1 represents a quantity of candidate frequency domain resources in a PSFCH candidate frequency domain resource set corresponding to transmission of a PSSCH;

L2 represents a quantity of candidate resources in a PSFCH candidate resource set corresponding to the transmission of the PSSCH;

Y represents a quantity of multiplexed PSFCHs (or a quantity of cyclic shift pairs) that can be supported by a single PSFCH candidate frequency domain resource;

K represents the first quantity;

M represents a quantity of PRBs between two neighboring PRBs in a same IRB, where M is determined by a subcarrier spacing; and

I represents a number of a PSFCH corresponding to the PSSCH, that is, I represents PSFCH index information.

It should be noted herein that, if a structure of a PSFCH resource is one first IRB and a first quantity of PRBs, in this optional implementation, the determined target PSFCH resource may be a first quantity of PRBs, and the PSFCH candidate resource set is a set of first PSFCH candidate frequency domain resources that meet a condition. On this basis, a common IRB further needs to be determined. A method for determining the common IRB is as follows: determining that a common IRB that is located in a same RB set as the determined first quantity of PRBs is a common IRB in a PSFCH transmission resource corresponding to the transmission of the PSSCH, or determining that a common IRB pre-defined in the resource pool is the determined common IRB. In addition, in this optional implementation, the determined target PSFCH resource may be a complete PSFCH resource (including a common IRB and a first PSFCH candidate resource) corresponding to a single time of PSFCH transmission, and the PSFCH candidate resource set is a set of complete PSFCH resources corresponding to a single time of PSFCH transmission.

In an example, based on the foregoing example with reference to FIG. 9, a UE determines an actual transmission resource based on (K+M)Mod 8, and a finally determined transmission resource is a dedicated PRB that needs to be occupied for transmission of a PSFCH that has a number of 7. A common IRB, for example, IRB#2, further needs to be occupied in actual transmission, and the common IRB and the dedicated PRB are located in a same RB set.

In another example, based on the foregoing example with reference to FIG. 11, a UE may determine an actually transmission resource (a target PSFCH resource) based on (K+M)Mod 10.

The sidelink resource determination method according to embodiments of the present application provides a PSFCH resource configuration method and a PSFCH resource mapping method under two PSFCH structures in SL-U, so that the method is applicable to a special structure of SL-U, thereby resolving a problem that PSFCH resource mapping or determination methods defined in standards of a related technology are not applicable to a physical layer structure of a PSFCH in SL-U.

It should be noted herein that sub-channels in the accompanying drawings are for illustration purposes only. In actual application, a structure of consecutive PRBs or IRBs may be used for the sub-channels. In addition, in the formulas involved in embodiments of the present application, $\lceil \bullet \rceil$ represents ceiling, and $\lfloor \bullet \rfloor$ represents flooring.

As shown in FIG. 12, an embodiment of the present application further provides a sidelink resource determination apparatus, including:

an acquiring module 1201, configured to acquire physical sidelink feedback channel PSFCH resource indication information; and

a first determining module 1202, configured to determine a target PSFCH resource based on the PSFCH resource indication information, where a single target PSFCH resource is used for PSFCH transmission, and the target PSFCH resource includes any one of the following:

one first IRB and a first quantity of PRBs; or
one second IRB.

Optionally, the PSFCH resource indication information includes at least one of the following:

first indication information, used to indicate a resource block set RB set that includes a PSFCH resource in a resource pool;
second indication information, used to indicate a PRB that is allowed to be used for PSFCH transmission and/or PSFCH reception;
third indication information, used to indicate a first IRB that is allowed to be used for PSFCH transmission and/or PSFCH reception; or
fourth indication information, used to indicate a second IRB that is allowed to be used for PSFCH transmission and/or PSFCH reception.

Optionally, the PRB that is allowed to be used for PSFCH transmission and/or PSFCH reception and that is indicated by the second indication information is any one of the following:

a PRB that is allowed to be used for PSFCH transmission and/or PSFCH reception and that is included in the resource pool; or
a PRB that is allowed to be used for PSFCH transmission and/or PSFCH reception and that is included in a target RB set.

The target RB set is the RB set indicated by the first indication information or at least one RB set in the resource pool.

Optionally, PRBs that are allowed to be used for PSFCH transmission and/or PSFCH reception and that are configured in the resource pool include a second quantity of first PSFCH candidate frequency domain resources, and the second quantity of first PSFCH candidate frequency domain resources meet at least one of the following conditions:

the second quantity is an integer multiple of a product of a PSFCH resource period and a quantity of sub-channels in the resource pool; or
the first PSFCH candidate frequency domain resource includes a first quantity of PRBs, where the first quantity of PRBs meet a first condition.

Optionally, PRBs that are allowed to be used for PSFCH transmission and/or PSFCH reception and that are configured in any RB set in the target RB set include a third quantity of first PSFCH candidate frequency domain resources, and the third quantity of first PSFCH candidate frequency domain resources meet at least one of the following conditions:

the third quantity is an integer multiple of a product of a PSFCH resource period and a quantity of sub-channels in any RB set in the target RB set; or
the first PSFCH candidate frequency domain resource includes the first quantity of PRBs, where the first quantity of PRBs meet a first condition.

Optionally, the second IRB that is allowed to be used for PSFCH transmission and/or PSFCH reception and that is indicated by the fourth indication information is any one of the following:

a second IRB that is allowed to be used for PSFCH transmission and/or PSFCH reception and that is included in the resource pool; or
a second IRB that is allowed to be used for PSFCH transmission and/or PSFCH reception and that is included in a target RB set.

The target RB set is the RB set indicated by the first indication information or at least one RB set in the resource pool.

Optionally, second IRBs that are allowed to be used for PSFCH transmission and/or PSFCH reception and that are configured in the resource pool include a fourth quantity of PSFCH candidate resources,

where the PSFCH candidate resource meets a second condition; and/or
the fourth quantity meets at least one of the following conditions:

the fourth quantity is an integer multiple of a product of a PSFCH resource period and a quantity of sub-channels in the resource pool; or

the fourth quantity is a product of a quantity of RB sets in the resource pool and a quantity of IRBs included in a single RB set.

Optionally, second IRBs that are allowed to be used for PSFCH transmission and/or PSFCH reception and that are configured in any RB set in the target RB set include a fifth quantity of PSFCH candidate resources,

where the PSFCH candidate resource meets a second condition; and/or
the fifth quantity meets at least one of the following conditions:

the fifth quantity is an integer multiple of a product of a PSFCH resource period and a quantity of sub-channels in any RB set in the target RB set; or
the fifth quantity is a quantity of IRBs included in any RB set in the target RB set.

Optionally, the apparatus further includes:
a second determining module, configured to: before the first determining module 1202 determines the target PSFCH resource based on the PSFCH resource indication information, execute at least one of the following:

determining a quantity of PSFCH candidate resources;
determining a correspondence between a PSFCH candidate resource and physical sidelink shared channel PSSCH slot and sub-channel; or
determining a PSFCH candidate resource set.

Optionally, when the second determining module is configured to determine the quantity of PSFCH candidate resources, the second determining module is specifically configured to:
determine the quantity of PSFCH candidate resources based on a third condition related to the PSFCH candidate resources and the PSFCH resource indication information, where the third condition is any one of the following:

one of the PSFCH candidate resources includes one first IRB and a first PSFCH candidate resource, where the first PSFCH candidate resource is the first quantity of PRBs; or
one of the PSFCH candidate resources includes one second IRB.

Optionally, the first PSFCH candidate resource meets a first condition.
Optionally, in a case that the third condition is that one of the PSFCH candidate resources includes one second IRB, the PSFCH candidate resource meets a second condition.
Optionally, in a case that the third condition is that one of the PSFCH candidate resources includes one first IRB and a first PSFCH candidate resource, when the second determining module is configured to determine the correspondence between a PSFCH candidate resource and physical sidelink shared channel PSSCH slot and sub-channel, the second determining module is specifically configured to:

determine, based on a PSFCH resource period, a quantity of sub-channels in a resource pool, and a quantity of PSFCH candidate resources in the resource pool, a quantity of first PSFCH candidate resources corresponding to one sub-channel in one PSSCH slot; or
for any RB set, determine, based on a PSFCH resource period, a quantity of sub-channels in the RB set, and a quantity of PSFCH candidate resources in the RB set, a quantity of first PSFCH candidate resources corresponding to one sub-channel in one PSSCH slot in the RB set.

Optionally, in a case that the third condition is that one of the PSFCH candidate resources includes one second IRB, when the second determining module is configured to determine the correspondence between a PSFCH candidate resource and physical sidelink shared channel PSSCH slot and sub-channel, the second determining module is specifically configured to execute at least one of the following:

determining, based on a PSFCH resource period, a quantity of sub-channels in a resource pool, and a quantity of PSFCH candidate resources in the resource pool, a quantity of PSFCH candidate resources corresponding to one sub-channel in one PSSCH slot;
determining, based on a PSFCH resource period, a quantity of sub-channels in a resource pool, and a quantity of PSFCH candidate resources in the resource pool, a quantity of sub-channels corresponding to one PSFCH candidate resource;

for any RB set, determining, based on a PSFCH resource period, a quantity of sub-channels in the RB set, and a quantity of PSFCH candidate resources in the RB set, a quantity of PSFCH candidate resources corresponding to one sub-channel in one PSSCH slot in the RB set;

for any RB set, determining, based on a PSFCH resource period, a quantity of sub-channels in the RB set, and a quantity of PSFCH candidate resources in the RB set, a quantity of sub-channels corresponding to one PSFCH candidate resource in the RB set;

determining, based on a PSFCH resource period, a quantity of sub-channels in a resource pool, a quantity of PSFCH candidate resources in the resource pool, and a quantity of multiplexed PSFCHs supported by a single PSFCH candidate frequency domain resource, a quantity of PSFCH candidate resources corresponding to one sub-channel in one PSSCH slot; or

for any RB set, determining, based on a PSFCH resource period, a quantity of sub-channels in the RB set, and a quantity of PSFCH candidate resources in the RB set, a quantity of PSFCH candidate resources corresponding to one sub-channel in one PSSCH slot in the RB set.

Optionally, in a case that the third condition is that one of the PSFCH candidate resources includes one second IRB, the correspondence between a PSFCH candidate resource and physical sidelink shared channel PSSCH slot and sub-channel includes at least one of the following:

an index of a sub-channel is the same as an index of an IRB corresponding to a PSFCH candidate resource;
an index of a sub-channel is the same as an index of a PSFCH candidate resource; or
an index of an IRB corresponding to a sub-channel is the same as an index of an IRB corresponding to a PSFCH candidate resource.

Optionally, when the second determining module is configured to determine the PSFCH candidate resource set, the second determining module is specifically configured to: determine, based on an occupied reference sub-channel in a reference RB set corresponding to transmission of a PSSCH, a PSFCH candidate resource set corresponding to the PSSCH.

Optionally, the reference RB set includes any one of the following:

an RB set with the smallest index among all RB sets corresponding to the transmission of the PSSCH;
an RB set with the largest index among all RB sets corresponding to the transmission of the PSSCH; or
all RB sets corresponding to the transmission of the PSSCH.

Optionally, the reference sub-channel includes any one of the following:

a starting sub-channel of a resource occupied by the transmission of the PSSCH in the reference RB set; or
all sub-channels of a resource occupied by the transmission of the PSSCH in the reference RB set.

Optionally, when the second determining module is configured to determine the PSFCH candidate resource set, the second determining module is further configured to:
screen the determined PSFCH candidate resource set, to obtain a target PSFCH candidate resource set that is available for the transmission of the PSFCH.

Optionally, in a case that a PSFCH candidate resource includes a first quantity of PRBs, each PSFCH candidate resource in the target PSFCH candidate resource set includes a first quantity of PRBs, and the first quantity of PRBs meet a first condition.

Optionally, the first condition includes at least one of the following:

being located in one RB set;
being located in a same IRB; or
being located in consecutive PRBs in a same IRB.

Optionally, in a case that the first condition includes being located in consecutive PRBs in a same IRB, the first quantity of PRBs includes any one of the following:

the first quantity of neighboring PRBs in a same IRB; or
the first quantity of neighboring PRBs in a same IRB except a PRB that is not allowed to be used for PSFCH transmission and/or PSFCH reception.

Optionally, in a case that the PSFCH candidate resource includes one second IRB, each PSFCH candidate resource in the target PSFCH candidate resource set meets a second condition.

Optionally, the second condition includes any one of the following:

being located at one IRB in one RB set; or
being located at PRBs in one IRB in one RB set except a PRB that is not allowed to be used for PSFCH transmission.

Optionally, when the second determining module is configured to determine the target PSFCH resource, the second determining module is specifically configured to:

determine the target PSFCH resource from the PSFCH candidate resource set based on at least one of the following:

a quantity of candidate resources in the PSFCH candidate resource set;
first identification information, used to indicate a source ID of a layer 1;
second identification information;
PSFCH index information; or
slot information.

As shown in FIG. 13, an embodiment of the present application provides a user equipment, including a transceiver 1310, a processor 1300, a memory 1320, and a program or instructions stored in the memory 1320 and capable of running on the processor 1300. When the processor 1300 executes the program or the instructions, the sidelink resource determination method is implemented.

The transceiver 1310 is configured to receive and transmit data under control of the processor 1300.

In FIG. 13, a bus architecture may include any quantity of interconnected buses and bridges, and specifically interconnect various circuits of one or more processors represented by the processor 1300 and a memory represented by the memory 1320. The bus architecture may further interconnect various other circuits such as a peripheral device, a voltage regulator, and a power management circuit. These are all well known in the art, and therefore are not further described in this specification. A bus interface provides an interface. The transceiver 1310 may be a plurality of components. That is, the transceiver 1310 includes a transmitter and a receiver; and provides units for communicating with various other apparatuses on a transmission medium. For different devices, a user interface 1330 may alternatively be an interface capable of externally or internally connecting a required device, and the connected device includes, but is not limited to, a keypad, a display, a speaker, a microphone, a joystick, and the like.

The processor 1300 is responsible for management of the bus architecture and general processing, and the memory 1320 may store data for use by the processor 1300 when the processor 1300 executes operations.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, an embodiment of the present application further provides a readable storage medium, and the readable storage medium stores a program. When the program is executed by a processor, the processes of the foregoing embodiments of the sidelink resource determination method are implemented, and a same technical effect can be achieved. To avoid repetition, details are not described herein again. The computer-readable storage medium includes a read-only memory (Read-Only Memory, ROM), a random access memory (Random Access Memory, RAM), a magnetic disk, or a compact disc.

It should be noted that in the apparatus and method of the present application, components or steps may be decomposed and/or recombined. The decomposition and/or the recombination shall be considered equivalent solutions to the present application. In addition, the steps for executing the foregoing series of processing may be executed in a chronological order as described, but are unnecessary to be executed in a chronological order, and some of the steps may be executed in parallel or independently from each other. A person of ordinary skill in the art can understand that all or any of the steps or components of the methods and apparatuses of the present application may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the descriptions of the present application.

Therefore, the objectives of the present application may also be achieved by running a program or a group of programs on any computing apparatus. The computing apparatus may be a well-known general apparatus. Therefore, the objectives of the present application may also be achieved by providing only a program product including program code for implementing the methods or apparatuses. In other words, such a program product is also included in the present application, and a storage medium that stores such a program product is also included in the present application.

Finally, it should be further noted that in this specification, relational terms such as "first" and "second" are only used to distinguish one entity or operation from another, and do not necessarily require or imply that any actual relationship or sequence exists between these entities or operations. In addition, the term "comprise", "include", or any other variant thereof is intended to cover a non-exclusive inclusion, so that a process, a method, an article, or a terminal device that includes a list of elements not only includes those elements but also includes other elements that are not expressly listed, or further includes elements inherent to such a process, method, article, or device. In absence of more constraints, an element preceded by "includes a..." does not preclude the existence of other identical elements in the process, method, article, or device that includes the element.

The foregoing descriptions are exemplary implementations of the present application. It should only be noted that those of ordinary skill in the art may further make various improvements and modifications without departing from the principles of the present application, and these improvements and modifications also fall within the protection scope of the present application.

## Claims

1. A sidelink resource determination method, comprising:

   acquiring physical sidelink feedback channel PSFCH resource indication information; and
   determining a target PSFCH resource based on the PSFCH resource indication information, wherein the target PSFCH resource is used for PSFCH transmission, and a single target PSFCH resource comprises any one of following:

   one first interlaced resource block IRB and a first quantity of physical resource blocks PRBs; or
   one second IRB.

2. The method according to claim 1, wherein the PSFCH resource indication information comprises at least one of following:

   first indication information, used to indicate a resource block set RB set that comprises a PSFCH resource in a resource pool;
   second indication information, used to indicate a PRB that is allowed to be used for PSFCH transmission and/or PSFCH reception;
   third indication information, used to indicate a first IRB that is allowed to be used for PSFCH transmission and/or PSFCH reception; or
   fourth indication information, used to indicate a second IRB that is allowed to be used for PSFCH transmission and/or PSFCH reception.

3. The method according to claim 2, wherein the PRB that is allowed to be used for PSFCH transmission and/or PSFCH reception and that is indicated by the second indication information is any of following:

   a PRB that is allowed to be used for PSFCH transmission and/or PSFCH reception and that is comprised in the resource pool; or
   a PRB that is allowed to be used for PSFCH transmission and/or PSFCH reception and that is comprised in a target RB set,
   wherein the target RB set is the RB set indicated by the first indication information or at least one RB set in the resource pool.

4. The method according to claim 3, wherein PRBs that are allowed to be used for PSFCH transmission and/or PSFCH reception and that are configured in the resource pool comprise a second quantity of first PSFCH candidate frequency domain resources, and the second quantity of first PSFCH candidate frequency domain resources meet at least one of following conditions:

   the second quantity is an integer multiple of a product of a PSFCH resource period and a quantity of sub-channels in the resource pool; or
   the first PSFCH candidate frequency domain resource comprises the first quantity of PRBs, wherein the first quantity of PRBs meet a first condition.

5. The method according to claim 3, wherein PRBs that are allowed to be used for PSFCH transmission and/or PSFCH reception and that are configured in any RB set in the target RB set comprise a third quantity of first PSFCH candidate frequency domain resources, and the third quantity of first PSFCH candidate frequency domain resources meet at least one of following conditions:

the third quantity is an integer multiple of a product of a PSFCH resource period and a quantity of sub-channels in any RB set in the target RB set; or
the first PSFCH candidate frequency domain resource comprises the first quantity of PRBs, wherein the first quantity of PRBs meet a first condition.

6. The method according to claim 2, wherein the second IRB that is allowed to be used for PSFCH transmission and/or PSFCH reception and that is indicated by the fourth indication information is any of following:

a second IRB that is allowed to be used for PSFCH transmission and/or PSFCH reception and that is comprised in the resource pool; or
a second IRB that is allowed to be used for PSFCH transmission and/or PSFCH reception and that is comprised in a target RB set,
wherein the target RB set is the RB set indicated by the first indication information or at least one RB set in the resource pool.

7. The method according to claim 6, wherein second IRBs that are allowed to be used for PSFCH transmission and/or PSFCH reception and that are configured in the resource pool comprise a fourth quantity of PSFCH candidate resources,

wherein the PSFCH candidate resource meets a second condition; and/or
the fourth quantity meets at least one of following conditions:

the fourth quantity is an integer multiple of a product of a PSFCH resource period and a quantity of sub-channels in the resource pool; or
the fourth quantity is a product of a quantity of RB sets in the resource pool and a quantity of IRBs comprised in a single RB set.

8. The method according to claim 6, wherein second IRBs that are allowed to be used for PSFCH transmission and/or PSFCH reception and that are comprised in any RB set in the target RB set comprise a fifth quantity of PSFCH candidate resources,

wherein the PSFCH candidate resource meet a second condition; and/or
the fifth quantity meets at least one of following conditions:

the fifth quantity is an integer multiple of a product of a PSFCH resource period and a quantity of sub-channels in any RB set in the target RB set; or
the fifth quantity is a quantity of IRBs comprised in any RB set in the target RB set.

9. The method according to claim 1, wherein before the determining the target PSFCH resource based on the PSFCH resource indication information, the method further comprises at least one of following:

determining a quantity of PSFCH candidate resources;
determining a correspondence between a PSFCH candidate resource and physical sidelink shared channel PSSCH slot and sub-channel; or
determining a PSFCH candidate resource set.

10. The method according to claim 9, wherein the determining the quantity of PSFCH candidate resources comprises: determining the quantity of PSFCH candidate resources based on a third condition related to the PSFCH candidate resources and the PSFCH resource indication information, wherein the third condition is any one of following:

one of the PSFCH candidate resources comprises one first IRB and a first PSFCH candidate resource, wherein the first PSFCH candidate resource is the first quantity of PRBs; or
one of the PSFCH candidate resources comprises one second IRB.

11. The method according to claim 10, wherein the first PSFCH candidate resource meets a first condition.

12. The method according to claim 10, wherein in a case that the third condition is that one of the PSFCH candidate resources comprises one second IRB, the PSFCH candidate resource meets a second condition.

13. The method according to claim 10, wherein in a case that the third condition is that one of the PSFCH candidate resources comprises one first IRB and a first PSFCH candidate resource, the determining the correspondence between the PSFCH candidate resource and the physical sidelink shared channel PSSCH slot and sub-channel comprises at least one of following:

   determining, based on a PSFCH resource period, a quantity of sub-channels in a resource pool, and a quantity of PSFCH candidate resources in the resource pool, a quantity of first PSFCH candidate resources corresponding to one sub-channel in one PSSCH slot; or
   for any RB set, determining, based on a PSFCH resource period, a quantity of sub-channels in the RB set, and a quantity of PSFCH candidate resources in the RB set, a quantity of first PSFCH candidate resources corresponding to one sub-channel in one PSSCH slot in the RB set.

14. The method according to claim 10, wherein in a case that the third condition is that one of the PSFCH candidate resources comprises one second IRB, the determining the correspondence between the PSFCH candidate resource and the physical sidelink shared channel PSSCH slot and sub-channel comprises at least one of following:

   determining, based on a PSFCH resource period, a quantity of sub-channels in a resource pool, and a quantity of PSFCH candidate resources in the resource pool, a quantity of PSFCH candidate resources corresponding to one sub-channel in one PSSCH slot;
   determining, based on a PSFCH resource period, a quantity of sub-channels in a resource pool, and a quantity of PSFCH candidate resources in the resource pool, a quantity of sub-channels corresponding to one PSFCH candidate resource;
   for any RB set, determining, based on a PSFCH resource period, a quantity of sub-channels in the RB set, and a quantity of PSFCH candidate resources in the RB set, a quantity of PSFCH candidate resources corresponding to one sub-channel in one PSSCH slot in the RB set;
   for any RB set, determining, based on a PSFCH resource period, a quantity of sub-channels in the RB set, and a quantity of PSFCH candidate resources in the RB set, a quantity of sub-channels corresponding to one PSFCH candidate resource in the RB set;
   determining, based on a PSFCH resource period, a quantity of sub-channels in a resource pool, a quantity of PSFCH candidate resources in the resource pool, and a quantity of multiplexed PSFCHs supported by a single PSFCH candidate frequency domain resource, a quantity of PSFCH candidate resources corresponding to one sub-channel in one PSSCH slot; or
   for any RB set, determining, based on a PSFCH resource period, a quantity of sub-channels in the RB set, and a quantity of PSFCH candidate resources in the RB set, a quantity of PSFCH candidate resources corresponding to one sub-channel in one PSSCH slot in the RB set.

15. The method according to claim 10, wherein in a case that the third condition is that one of the PSFCH candidate resources comprises one second IRB, the correspondence between the PSFCH candidate resource and the physical sidelink shared channel PSSCH slot and sub-channel comprises at least one of following:

   an index of a sub-channel is the same as an index of an IRB corresponding to a PSFCH candidate resource;
   an index of a sub-channel is the same as an index of a PSFCH candidate resource; or
   an index of an IRB corresponding to a sub-channel is the same as an index of an IRB corresponding to a PSFCH candidate resource.

16. The method according to claim 9, wherein the determining the PSFCH candidate resource set comprises:

   determining, based on an occupied reference sub-channel in a reference RB set corresponding to transmission of a PSSCH, a PSFCH candidate resource set corresponding to the PSSCH.

17. The method according to claim 16, wherein the reference RB set comprises any of following:

   an RB set with a smallest index among all RB sets corresponding to the transmission of the PSSCH;

an RB set with a largest index among all RB sets corresponding to the transmission of the PSSCH; or

all RB sets corresponding to the transmission of the PSSCH.

18. The method according to claim 16, wherein the reference sub-channel comprises any of following:

a starting sub-channel of a resource occupied by the transmission of the PSSCH in the reference RB set; or

all sub-channels of a resource occupied by the transmission of the PSSCH in the reference RB set.

19. The method according to claim 16, wherein the determining the PSFCH candidate resource set further comprises: screening the determined PSFCH candidate resource set, to obtain a target PSFCH candidate resource set that is available for the transmission of the PSFCH.

20. The method according to claim 19, wherein in a case that the PSFCH candidate resource comprises the first quantity of PRBs, each PSFCH candidate resource in the target PSFCH candidate resource set comprises the first quantity of PRBs, and the first quantity of PRBs meet a first condition.

21. The method according to claim 4, 5, 11, or 20, wherein the first condition comprises at least one of following:

being located in one RB set;
being located in a same IRB; or
being located in consecutive PRBs in a same IRB.

22. The method according to claim 21, wherein in a case that the first condition comprises being located in consecutive PRBs in a same IRB, the first quantity of PRBs comprises any one of following:

the first quantity of neighboring PRBs in a same IRB; or
the first quantity of neighboring PRBs in a same IRB except a PRB that is not allowed to be used for PSFCH transmission and/or PSFCH reception.

23. The method according to claim 19, wherein in a case that the PSFCH candidate resource comprises one second IRB, each PSFCH candidate resource in the target PSFCH candidate resource set meets a second condition.

24. The method according to claim 7, 8, 12, or 23, wherein the second condition comprises any of following:

being located at one IRB in one RB set; or
being located at PRBs in one IRB in one RB set except a PRB that is not allowed to be used for PSFCH transmission.

25. The method according to claim 9, wherein the determining the target PSFCH resource comprises: determining the target PSFCH resource from the PSFCH candidate resource set based on at least one of following:

a quantity of candidate resources in the PSFCH candidate resource set;
first identification information, used to indicate a source ID of a layer 1;
second identification information;
PSFCH index information; or
slot information.

26. A sidelink resource determination apparatus, comprising:

an acquiring module, configured to acquire physical sidelink feedback channel PSFCH resource indication information; and
a first determining module, configured to determine a target PSFCH resource based on the PSFCH resource indication information, wherein a single target PSFCH resource is used for PSFCH transmission, and the target PSFCH resource comprises any one of following:

one first IRB and a first quantity of PRBs; or
one second IRB.

27. A user equipment, comprising a transceiver, a memory, a processor, and a computer program stored in the memory and running on the processor, wherein when the processor executes the computer program, the sidelink resource determination method according to any one of claims 1 to 25 is implemented.

28. A readable storage medium, wherein the readable storage medium stores a program or instructions, and when the program or the instructions are executed by a processor, the sidelink resource determination method according to any one of claims 1 to 25 is implemented.

Acquiring physical sidelink feedback channel PSFCH resource indication information | 101

Determining a target PSFCH resource based on the PSFCH resource indication information, where the target PSFCH resource is used for PSFCH transmission, and a single target PSFCH resource includes any one of the following: one first interlaced resource block IRB and a first quantity of physical resource blocks PRBs; or one second IRB | 102

FIG. 1

IRB index:   0  1  2  3  4  0  1  2  3  4  0  1  2  3  4  0
PRB index:   0  1  2  3  4  5  6  7  8  9  10 11 12 13 14 15

Bitmap (Bitmap):  1  0  0  0  1  1  0  0  0  1  0  0  0  0  0  0

FIG. 2

IRB index:   0  1  2  3  4  0  1  2  3  4  0  1  2  3  4  0
PRB index:   0  1  2  3  4  5  6  7  8  9  10 11 12 13 14 15

Bitmap (Bitmap):  1  0  1  0  1  0  0  1  0  0  1  0  0  0  1  0

FIG. 3

IRB index:   0  1  2  3  4  0  1  2  3  4        0  1  2  3  4  0  1  2  3  4  0  1  2  3  4        0  1  2  3  4
PRB index:   0  1  2  3  4  5  6  7  8  9        45 46 47 48 49 50 51 52 53 54 55 56 57 58 59     95 96 97 98 99

Bitmap (Bitmap):  1  1  1  1  1  1  1  1  1  1    ...   0  0  0  0  0  1  1  1  1  1  1  1  1  1  1    ...   0  0  0  0  0

Resource block set#0 (RB set#0)          Resource block set#1 (RB set#1)

FIG. 4

IRB index:   0  1  2  3  4  0  1  2  3  4        0  1  2  3  4  0  1  2  3  4  0  1  2  3  4        0  1  2  3  4
PRB index:   0  1  2  3  4  5  6  7  8  9        45 46 47 48 49 50 51 52 53 54 55 56 57 58 59     95 96 97 98 99

Bitmap (Bitmap):  1  0  0  0  0  1  0  0  0  0    ...   1  0  0  0  0  0  1  0  0  0  0  1  0  0  0    ...   0  1  0  0  0

Resource block set#0 (RB set#0)          Resource block set#1 (RB set#1)

FIG. 5

IRB index: 0 1 2 3 4 0 1 2 3 4      0 1 2 3 4 0 1 2 3 4 0 1 2 3 4      0 1 2 3 4

PRB index: 0 1 2 3 4 5 6 7 8 9    45 46 47 48 49 50 51 52 53 54 55 56 57 58 59    95 96 97 98 99

Bitmap (Bitmap): 1 0 0 0 0 0 0 0 0 0    1 0 0 0 0 0 1 0 0 0 0 1 0 0 0    0 1 0 0 0

Resource block set#0 (RB set#0)      Resource block set#1 (RB set#1)

FIG. 6

PRB index: 0 1 2 3 4 5 6 7 8 9 10 11 12 13 14 15

Bitmap (Bitmap): 1 1 1 1 1 1 0 0 0 1 1 1 0 1 1 1

PRB index: 0 1 2 3 4 5 6 7 8 9 10 11 12 13 14 15

PSFCH candidate resource index: 0 1 2

FIG. 7

PRB index: 0 1 2 3 4 5 6 7 8 9 10 11 12 13 14 15

Bitmap (Bitmap): 1 1 1 1 1 1 0 0 0 1 1 1 0 1 1 1

PRB index: 0 1 2 3 4 5 6 7 8 9 10 11 12 13 14 15

PSFCH candidate resource index: 0 1 2 3 4

FIG. 8

Slot

Sub-channel

| 0 | 1 | 2 | 3 |
| 4 | 5 | 6 | 7 |
| 8 | 9 | 10 | 11 |
| 12 | 13 | 14 | 15 |

0 1 2 3 4 5 6 7 8 9 10 11 12 13 14 15

Code domain

Frequency domain

0 4 IRB#0
5 IRB#1
... ...
0 4 IRB#0
5 IRB#1

2 6 IRB#4
3 7 IRB#5

2 6 IRB#4
3 7 IRB#5

One candidate frequency domain resource

FIG. 9

FIG. 10

FIG. 11

FIG. 12

FIG. 13

## INTERNATIONAL SEARCH REPORT

International application No.

**PCT/CN2024/099690**

### A.    CLASSIFICATION OF SUBJECT MATTER

H04W 72/044(2023.01)i

According to International Patent Classification (IPC) or to both national classification and IPC

### B.    FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; CNKI; IEEE; 3GPP; VEN; USTXT; WOTXT; EPTXT: 直通链路, 边连璐, 资源, 确定, 反馈信道, 指示, 传输, 梳齿资源块, 交错资源块, 梳尺资源块, 物理资源块, 第一, 第二, 多个, 集合, 资源池, 单次, 专用, 公用, 控制信息, 混合自动重传请求确认, V2X, D2D, sidelink, unlicensed spectrum, SL-U, feedback channel, PSFCH, PRB, interlace, resource block, IRB, HARQ, conflict information, common, dedicated

### C.    DOCUMENTS CONSIDERED TO BE RELEVANT

| Category* | Citation of document, with indication, where appropriate, of the relevant passages | Relevant to claim No. |
|---|---|---|
| Y | WO 2021232382 A1 (GUANGDONG OPPO MOBILE COMMUNICATIONS CO., LTD.) 25 November 2021 (2021-11-25)<br>    description, page 3, line 45 to page 11, line 19, and figure 10 | 1-28 |
| Y | QUALCOMM INC. "Physical Channel Design for Sidelink on Unlicensed Spectrum"<br>*3GPP TSG-RAN WG1 #112bis-e, R1-2303592*, 08 April 2023 (2023-04-08),<br>    section 2.3.2 | 1-28 |
| A | CN 114467352 A (BEIJING XIAOMI MOBILE SOFTWARE CO., LTD.) 10 May 2022 (2022-05-10)<br>    entire document | 1-28 |

☐ Further documents are listed in the continuation of Box C.        ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **28 August 2024** | **15 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099690**

| Patent document cited in search report | | | Publication date (day/month/year) | Patent family member(s) | | | Publication date (day/month/year) |
|---|---|---|---|---|---|---|---|
| WO | 2021232382 | A1 | 25 November 2021 | EP | 4156811 | A1 | 29 March 2023 |
| | | | | EP | 4156811 | A4 | 07 June 2023 |
| | | | | US | 2023069882 | A1 | 09 March 2023 |
| CN | 114467352 | A | 10 May 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311018199